(19) Europäisches Patentamt

European Patent Office

Office européen des brevets

(11) **EP 4 402 556 B1**

(12) **EUROPEAN PATENT SPECIFICATION**

(45) Date of publication and mention of the grant of the patent:
**04.03.2026 Bulletin 2026/10**

(21) Application number: **22764976.1**

(22) Date of filing: **10.08.2022**

(51) International Patent Classification (IPC):
*G06F 3/01* (2006.01)      *G06T 7/70* (2017.01)
*G06T 19/00* (2011.01)      *G06F 3/03* (2006.01)
*G06T 7/246* (2017.01)      *G06V 10/44* (2022.01)
*G06V 20/20* (2022.01)

(52) Cooperative Patent Classification (CPC):
**G06F 3/011; G06F 3/012; G06F 3/0304; G06T 7/246; G06T 19/006; G06V 10/44; G06V 20/20;** G06T 2207/10021; G06T 2207/10024; G06T 2207/30244

(86) International application number:
**PCT/US2022/074741**

(87) International publication number:
**WO 2023/039327 (16.03.2023 Gazette 2023/11)**

(54) **DISPLAY OF DIGITAL MEDIA CONTENT ON PHYSICAL SURFACE**

ANZEIGE DIGITALER MEDIENINHALTE AUF PHYSIKALISCHER OBERFLÄCHE

AFFICHAGE DE CONTENU MÉDIA NUMÉRIQUE SUR UNE SURFACE PHYSIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2021 US 202117473691**

(43) Date of publication of application:
**24.07.2024 Bulletin 2024/30**

(73) Proprietor: **QUALCOMM INCORPORATED**
**San Diego, California 92121-1714 (US)**

(72) Inventors:
• **YU, Yang**
**San Diego, California 92121 (US)**
• **BARKER, Scott**
**San Diego, California 92121 (US)**
• **KIES, Jonathan**
**San Diego, California 92121 (US)**

(74) Representative: **Reddie & Grose LLP**
**The White Chapel Building**
**10 Whitechapel High Street**
**London E1 8QS (GB)**

(56) References cited:
**US-A1- 2012 050 326      US-A1- 2017 243 052**

• **MARK BILLINGHURST: "The MagicBook— Moving Seamlessly between Reality and Virtuality", 7 August 2002 (2002-08-07), XP055353325, Retrieved from the Internet <URL:http://ieeexplore.ieee.org/ielx5/38/ 19913/00920621.pdf?tp=&arnumber=920621& isnumber=19913> [retrieved on 20170309], DOI: 10.1109/MC.2012.111**
• **MAN CHUEN LEUNG ET AL: "A projector-based movable hand-held display system", 2009 IEEE CONFERENCE ON COMPUTER VISION AND PATTERN RECOGNITION : CVPR 2009 ; MIAMI [BEACH], FLORIDA, USA, 20 - 25 JUNE 2009, IEEE, PISCATAWAY, NJ, 20 June 2009 (2009-06-20), pages 1109 - 1114, XP031514293, ISBN: 978-1-4244-3992-8**
• **SHILPI GUPTA ET AL: "The universal media book", MIXED AND AUGMENTED REALITY, 2006. ISMAR 2006. IEEE/ACM INTERNATIONAL SYMPOSIUM ON, IEEE, PI, 22 October 2006 (2006-10-22), pages 177 - 180, XP058378980, ISBN: 978-1-4244-0650-0, DOI: 10.1109/ ISMAR.2006.297811**

EP 4 402 556 B1

- MARGETIS G ET AL: "Augmenting physical books towards education enhancement", USER-CENTERED COMPUTER VISION (UCCV), 2013 1ST IEEE WORKSHOP ON, IEEE, 15 January 2013 (2013-01-15), pages 43 - 49, XP032422459, ISBN: 978-1-4673-5675-6, DOI: 10.1109/ UCCV.2013.6530807

**Description**

FIELD

This application is related to extended reality systems. For example, aspects of the application relate to systems and techniques of displaying digital media content, such as electronic books, on physical surfaces or objects.

BACKGROUND

Extended reality (XR) systems can include virtual reality (VR) systems, augmented reality (AR) systems, mixed reality (MR) systems, and/or other systems. XR systems can provide numerous types of XR environments. For example, an XR system can overlay virtual content onto images of a real world environment, which can be viewed by a user through an XR device (e.g., a head-mounted display, XR glasses, or other XR device). Some XR systems may provide accompanying audio content to the user. The real world environment can include physical objects, people, or other real world objects. XR systems can enable users to interact with the virtual content overlaid onto the real world environment. In some cases, interactions with the virtual content may involve interactions with physical objects in the environment. For example, an XR-based reading application may require a user to look at, hold, and/or interact with a physical book.

Degrees of freedom (DoF) refer to the number of basic ways a rigid object can move through three-dimensional (3D) space. In some examples, six different DoF can be tracked (referred to as 6DoF). The six DoF of 6DoF include three translational DoF corresponding to translational movement along three perpendicular axes, which can be referred to as x, y, and z axes. The six DoF also include three rotational DoF corresponding to rotational movement around the three axes, which can be referred to as pitch, yaw, and roll. Some XR devices, such as VR or AR headsets or glasses, can track some or all of the six degrees of freedom. For instance, a 3DoF XR headset typically tracks the three rotational DoF, and can therefore track whether a user turns and/or tilts their head. A 6DoF XR headset tracks all six DoF, and thus also tracks a user's translational movements in addition to the three rotational DoF. US 2012/050326 A1 discusses a method and apparatus adapted to input a position and orientation of a viewpoint in an image in MR space obtained by superimposing a first virtual object to be displayed on a display of a real space; to input a position and orientation of the real object; to calculate an amount of change in a relative orientation between the orientation of the viewpoint and the orientation of the real object; to switch a first virtual object to be displayed to a second virtual object to be displayed which is different from the first virtual object to be displayed when the amount of change exceeds a predetermined threshold; and to output an image in the MR space obtained by superimposing the second virtual object to be displayed on the display of the real space in accordance with the position and orientation of the viewpoint and the position of the real object. Mark Billinghurst: "The MagicBook— Moving Seamlessly between Reality and Virtuality", DOI: 10.1109/MC.2012.111, discusses a MagicBook interface. In this arrangement, if a person looks at the pages through an augmented reality display, they see 3D virtual models appearing out of the pages. The models appear attached to the real page so users can see the augmented reality scene from any perspective by moving themselves or the book. Multiple users can immerse in the same virtual scene. US 2017/243052 A1 discusses a book detection apparatus that detects a plurality of surface regions on the basis of three-dimensional measurement data that is obtained by a three-dimensional sensor and that falls within a search area, and determines, when a positional relationship between two surface regions among the plurality of surface regions satisfies a positional condition corresponding to a positional relationship between two opened pages of an opened book, the two surface regions as a book region that includes the book. MAN CHUEN LEUNG ET AL: "A projector-based movable hand-held display system", IEEE CONFERENCE ON COMPUTER VISION AND PATTERN RECOGNITION : CVPR 2009, ISBN: 978-1-4244-3992-8 discusses a moveable hand-held display system which uses a projector to project display content onto an ordinary cardboard which can move freely within the project area. A vision based algorithm is presented to detect an ordinary cardboard and track its subsequent motion. Display content is then pre-warped and projected onto the cardboard at the correct position. SHILPI GUPTA ET AL: "The universal media book", MIXED AND AUGMENTED REALITY, DOI: 10.1109/ISMAR.2006.297811, discusses integration of projected imagery with a physical book that acts as a tangible interface to multimedia data. Using a camera and projector pair, a tracking framework is presented wherein the 3D position of planar pages are monitored as they are turned back and forth by a user, and data is correctly warped and projected onto each page at interactive rates. The book pages are blank, so traditional approaches to tracking physical features on the display surface do not apply. Instead, in each frame, feature points are independently extracted from the camera and projector images, and matched in order to recover the geometry of the pages in motion. The book can be loaded with multimedia content, including images, videos, and volumetric datasets (in which case a page can be removed from the book and used to navigate through a virtual 3D volume). MARGETIS G ET AL: "Augmenting physical books towards education enhancement", USER-CENTERED COMPUTER VISION (UCCV) DOI: 10.1109/UCCV.2013.6530807 discusses an interactive desk that augments physical books that are placed upon its surface with multimedia content and interactive applications. Such content is dynamically displayed in augmentation to the currently open page of the book, that is, aligned in realtime with its 2D orientation upon the desk. The rendered applications are controlled by the users with the use of a stylus, both through contact with the book or desk, as well as, through a small vocabulary of gestures performed with the stylus.

SUMMARY

The invention is defined in the appended independent claims, to which attention is directed. Optional features are set out in the dependent claims. Any feature mentioned in the following description that uses the modal verb "may" should be regarded as describing a mandatory feature if the feature in question is part of an independent claim. Examples presented herein that are not covered by the independent claims are presented not as embodiments but as examples useful for understanding the invention.

BRIEF DESCRIPTION OF THE DRAWINGS

Illustrative embodiments of the present application are described in detail below with reference to the following figures:

FIG. 1 is a block diagram illustrating an architecture of an example extended reality (XR) system, in accordance with some examples of the present disclosure;

FIG. 2 is a block diagram illustrating an architecture of a simultaneous localization and mapping (SLAM) device;

FIG. 3 is a perspective diagram illustrating a user within an environment containing physical books that can be used as a display surface for digital media content;

FIG. 4A, FIG. 4B, FIG. 4C, and FIG. 4D illustrate perspective diagrams of display surface detection techniques, in accordance with some examples;

FIG. 5A and FIG. 5B illustrate a perspective diagram of digital media content projection on a physical book, in accordance with some examples;

FIG. 6A, FIG. 6B, FIG. 6C, and FIG. 6D illustrate diagrams of page deformation detection and modeling techniques, in accordance with some examples;

FIG. 7A, FIG. 7B, FIG. 7C, FIG. 7D, and FIG. 7E illustrate examples of user interactions with projected eBook content displayed on pages of a physical book, in accordance with some examples;

FIG. 8A is a perspective diagram illustrating a head-mounted display (HMD) that can project eBook content on a display surface, in accordance with some examples;

FIG. 8B is a perspective diagram illustrating the head-mounted display (HMD) of FIG. 8A being worn by a user, in accordance with some examples;

FIG. 9 is a flow diagram illustrating an example of technique for displaying media content, in accordance with some examples;

FIG. 10 is a diagram illustrating an example of a system for implementing certain aspects of the present technology.

DETAILED DESCRIPTION

Certain aspects and embodiments of this disclosure are provided below. Some of these aspects and embodiments may be applied independently and some of them may be applied in combination as would be apparent to those of skill in the art. In the following description, for the purposes of explanation, specific details are set forth in order to provide a thorough understanding of embodiments of the application. However, it will be apparent that various embodiments may be practiced without these specific details. The figures and description are not intended to be restrictive.

The ensuing description provides exemplary embodiments only, and is not intended to limit the scope, applicability, or configuration of the disclosure. Rather, the ensuing description of the exemplary embodiments will provide those skilled in the art with an enabling description for implementing an exemplary embodiment. It should be understood that various changes may be made in the function and arrangement of elements without departing from the scope of the application as set forth in the appended claims.

Extended reality (XR) systems or devices can provide virtual content to a user and/or can combine real-world or physical environments and virtual environments (made up of virtual content) to provide users with XR experiences. The real-world environment can include real-world objects (also referred to as physical objects), such as books, people, vehicles, buildings, tables, chairs, and/or other real-world or physical objects. XR systems or devices can facilitate interaction with different types of XR environments (e.g., a user can use an XR system or device to interact with an XR environment). XR systems can include virtual reality (VR) systems facilitating interactions with VR environments, augmented reality (AR) systems facilitating interactions with AR environments, mixed reality (MR) systems facilitating interactions with MR environments, and/or other XR systems. As used herein, the terms XR system and XR device are used interchangeably. Examples of XR systems or devices include head-mounted displays (HMDs), smart glasses, among others. In some cases, an XR system can track parts of the user (e.g., a hand and/or fingertips of a user) to allow the user to interact with items of virtual content.

AR is a technology that provides virtual or computer-generated content (referred to as AR content) over the user's view of a physical, real-world scene or environment. AR content can include virtual content, such as video, images, graphic content, location data (e.g., global positioning system (GPS) data or other location data), sounds, any combination thereof, and/or other augmented content. An AR system or device is designed to enhance (or augment), rather than to replace, a person's current perception of reality. For example, a user can see a real stationary or moving physical object through an AR device display, but the user's visual perception of the physical object may be augmented or enhanced by a virtual image of that object (e.g., a real-world car replaced by a virtual image of a DeLorean), by AR content added to the physical object (e.g., virtual wings added to a live animal), by AR content displayed relative to the physical object (e.g., informational virtual content displayed near a sign on a building, a virtual coffee cup virtually anchored to (e.g., placed on top of) a real-world table in one or more images, etc.), and/or by displaying other types of AR content. Various types of AR systems can be used for gaming, entertainment, and/or other applications.

In some cases, two types of AR systems that can be used to provide AR content include video see-through (also referred to as video pass-through) displays and optical see-through displays. Video see-through and optical see-through displays can be used to enhance a user's visual perception of real-world or physical objects. In a video see-through system, a live video of a real-world scenario is displayed (e.g., including one or more objects augmented or enhanced on the live video). A video see-through system can be implemented using a mobile device (e.g., video on a mobile phone display), an HMD, or other suitable device that can display video and computer-generated objects over the video.

An optical see-through system with AR features can display AR content directly onto the view of the real-world scene (e.g., without displaying video content of the real-world scene). For example, the user may view physical objects in the real-world scene through a display (e.g., glasses or lenses), and the AR system can display AR content (e.g., projected or otherwise displayed) onto the display to provide the user with an enhanced visual perception of one or more real-world objects. Examples of optical see-through AR systems or devices are AR glasses, an HMD, another AR headset, or other similar device that can include a lens or glass in front of each eye (or a single lens or glass over both eyes) to allow the user to see a real-world scene with physical objects directly, while also allowing an enhanced image of that object or additional AR content to be projected onto the display to augment the user's visual perception of the real-world scene.

VR provides a complete immersive experience in a three-dimensional computer-generated VR environment or video depicting a virtual version of a real-world environment. The VR environment can be interacted with in a seemingly real or physical way. As a user experiencing a VR environment moves in the real world, images rendered in the virtual environment also change, giving the user the perception that the user is moving within the VR environment. For example, a user can turn left or right, look up or down, and/or move forwards or backwards, thus changing the user's point of view of the VR environment. The VR content presented to the user can change accordingly, so that the user's experience is as seamless as in the real world. VR content can include VR video in some cases, which can be captured and rendered at very high quality, potentially providing a truly immersive virtual reality experience. Virtual reality applications can include gaming, training, education, sports video, online shopping, among others. VR content can be rendered and displayed using a VR system or device, such as a VR HMD or other VR headset, which fully covers a user's eyes during a VR experience.

MR technologies can combine aspects of VR and AR to provide an immersive experience for a user. For example, in an MR environment, real-world and computer-generated objects can interact (e.g., a real person can interact with a virtual person as if the virtual person were a real person).

Visual simultaneous localization and mapping (VSLAM) is a computational geometry technique used in devices with cameras, such as robots, head-mounted displays (HMDs), mobile handsets, and autonomous vehicles. In VSLAM, a device can construct and update a map of an unknown environment based on images captured by one or more cameras of the device. The device can keep track of the device's pose within the environment (e.g., location and/or orientation) as the device updates the map. For example, the device can be activated in a particular room of a building and can move throughout the interior of the building, capturing images. The device can map the environment, and keep track of its location in the environment, based on tracking where different objects in the environment appear in different images. An XR system or device can utilize VSLAM, such as to allow the XR system to recognize and track three-dimensional (3D) objects and scenes (e.g., walls, barriers, etc.) in the real-world (e.g., for anchoring virtual content, for predictive functions such as recommendations, etc.).

Degrees of freedom (DoF) refer to the number of basic ways a rigid object can move through 3D space. In some cases, six different DoF can be tracked. The six degrees of freedom include three translational degrees of freedom corresponding to translational movement along three perpendicular axes. The three axes can be referred to as x, y, and z axes. The six degrees of freedom further include three rotational degrees of freedom corresponding to rotational movement around the three axes, which can be referred to as pitch, yaw, and roll.

In the context of systems that track movement through an environment, such as XR systems and/or VSLAM systems, degrees of freedom can refer to which of the six degrees of freedom the system is capable of tracking. 3DoF systems generally track the three rotational DoF - pitch, yaw, and roll. A 3DoF headset, for instance, can track the user of the headset turning their head left or right, tilting their head up or down, and/or tilting their head to the left or right. 6DoF systems can track the three translational DoF as well as the three rotational DoF. Thus, a 6DoF AR headset, for instance, and can track the user moving forward, backward, laterally, and/or vertically in addition to tracking the three rotational DoF.

Systems that track movement through an environment, such as XR systems and/or VSLAM systems, generally include powerful processors. These powerful processors can be used to perform complex operations quickly enough to display an up-to-date output based on those operations to the users of these systems. Such complex operations can relate to feature tracking, 6DoF tracking, VSLAM, rendering virtual objects to appear overlaid over the environment in XR, animating the virtual objects, and/or other operations discussed herein.

Electronic books (eBooks) provide many advantages over printed books. One example advantage is the ability to read within varied lighting conditions. For example, many devices for reading eBooks include backlighting to allow users to read in the dark and also provide the ability to read under natural lighting conditions. Another advantage is portability, as eBooks can allow users to carry many books (e.g., hundreds, thousands, etc.) at once without being limited by the weight of paper. Other eBook advantages include the ability to take notes, highlight passages, and bookmark locations electronically. In some cases, eBooks can include navigation features that facilitate fast navigation between notes, highlights, and bookmarks. In some cases, eBooks include additional user convenience tools such as a dictionary function to search for the meaning of unknown words and augmented reality features, among others.

Paper books can also have advantages over eBooks. For example, users may prefer the tactile feel of holding a book and touching its pages. It is also relatively easy for a user to flip between adjacent pages in a printed book. Some users may also find the experience of reading and handling a printed book more immersive and/or easier to focus on.

As described in more detail herein, systems, apparatuses, methods (also referred to as processes, and computer-readable media (collectively referred to herein as "systems and techniques") are described herein for providing an XR system that combines the benefits of eBooks and printed books. In some cases, the XR system can include a wearable device, such as a head mounted display (HMD) or XR glasses, that can display media content (e.g., eBook content, images, video, or the like) on the pages of a physical book and/or other surface or object. In some cases, eBook content can be projected and/or rendered by the XR system to appear to the user as if the text is printed on the pages of a physical book. In some examples, the physical book can be a book with blank pages. In some implementations, the physical book can be any printed book that includes text and/or illustrations that differ from the eBook content displayed by the XR system. The XR system can provide features and benefits of eBooks, such as notes, highlights, bookmarks, search tools, and the like. The XR system can include an AR system or device (e.g., a video see-through/pass-through AR system or device), a VR system or device, or an MR system or device.

Although specific examples of projecting and rendering eBook content onto physical books are provided through the present disclosure, the systems and techniques described herein can be used more generally to project and/or render digital media content (which can include eBooks) on any type of display surfaces (which can include physical books). In addition, any references herein to digital media content can include eBooks and any references to a display surface can include physical books or portions thereof.

In some cases, the XR system can determine a display area for displaying eBook content on a display surface (e.g., pages of a physical book). In some cases, the XR system can determine the display area by detecting features of the physical book, such as corners, edges, existing printed text, or the like. In some cases, the XR system can determine the display area for displaying the eBook content at least in part by detecting a particular (e.g., predefined) gesture or gestures. Illustrative examples of such gestures can include pointing at the boundary of the printed book page, drawing a line along the boundary of the page using a finger, any combination thereof, and/or other gestures. In some cases, the printed book can be a book with special markings on the pages to help with detection of the book and/or with determining the pose of the book.

In some cases, the XR system can determine the pose (e.g., orientation and translation) of the physical book and its pages in order to determine the proper location and orientation to display the digital media content relative to the book page(s). In some examples, the XR system can use 6DoF tracking to determine the pose of the book and/or the pose of the XR system.

In some examples, the pages of the physical book can be open in any arbitrary orientation relative to the XR system. In some cases, the XR system can determine the location of corners and/or edges of a page of the book. In some examples, the XR system can determine contours of the page (also referred to as a deformation model herein) based on the size of the physical book, the positions of the corners and/or edges, existing text and/or illustrations on the page, shadows on the page, or any other characteristics related to the physical book. In some cases, the XR system can use 6DoF tracking to detect when the user turns and/or tilts their head and/or moves translationally to ensure proper location and orientation of the projected or rendered digital media content on the physical book pages.

In some cases, the XR system can emulate the reading behavior of a physical book for display of digital media content. For example, for eBook content, the page of the eBook content can be advanced when the XR system detects that the page of the physical book has been turned. In some examples, the eBook content can be sized to match to physical dimensions of the physical book page. In some cases, the digital media content can be sized so that the amount of text displayed on each page is consistent with the pagination of a print version of the digital book content.

In some cases, the XR system can present eBook content in ways that are convenient for the user but differ from the reading behavior of printed books. For example, the XR system may display non-consecutive pages of an eBook on the left and right pages of a physical book. In one illustrative example, the user may provide input instructing the XR system to maintain the digital book content displayed on the left (or right) page of the printed book static while the user instructs the XR system to flip through pages of the eBook on the opposing page.

In some implementations, the user may choose to instruct (e.g., via user input) the XR system to display the digital media content on a display surface other than a physical book. In some cases, the user may choose to move the display of some or all of the digital media content from a physical book page to another surface. For example, the user may choose to move the content from the physical book page onto a wall, ceiling, object, a different printed book, a newspaper, a magazine, a comic book and/or another surface. In one illustrative example, the user can position their head up to face a wall, issue a command (e.g., a user input, such as performing a gesture, selecting a physical or virtual button, etc.), and in response to the command, the XR system can cause display of the content (or a portion of the content) to change from being displayed relative to a physical book page to being displayed relative to the wall. In some cases, the user may provide a command to the XR system that causes the XR system to display the digital media content on the wall and the book pages as simultaneous display surfaces. For example, the user may wish to view more than two pages of text without having to flip between pages. In another example, the user may wish to compare the content of two books, one rendered on the pages of a printed book, and the other rendered on a wall.

In some cases, the XR system can respond to other user inputs, such as gestures, voice inputs or commands, etc. For example, a user gesture (e.g., a hand gesture) can be used to change the displayed digital book content by a page, change the digital book content by a predetermined number of pages (e.g., 3 pages, 10 pages), change to the next chapter, change to the nearest page containing one or more highlights, notes, or other annotation(s), any combination thereof, and/or other commands. The change in book content can be either forward or backward (e.g., depending on the direction of the user's gesture).

In some cases, the text and/or picture content of eBook content can be augmented with additional content. For example, the XR system can display eBook text while simultaneously rendering video, audio, music, or other digital content, collectively referred to herein as supplemental content. In one illustrative example, if a paragraph is describing Yosemite national park, a video describing Yosemite national park can be rendered relative to the paragraph (e.g., beside the paragraph, above or below the paragraph, etc.). In another example, if a paragraph is introducing a particular pianist, the XR system can play a sample of the pianist's music for the user. In some cases, the user can control whether the XR system renders the supplemental content. In some cases, the XR system can present to the user (e.g., as a user interface element, such as an icon, text, a voice prompt, or other user interface element) an option of sharing the media content that the user is viewing/reading with other users also using an XR system.

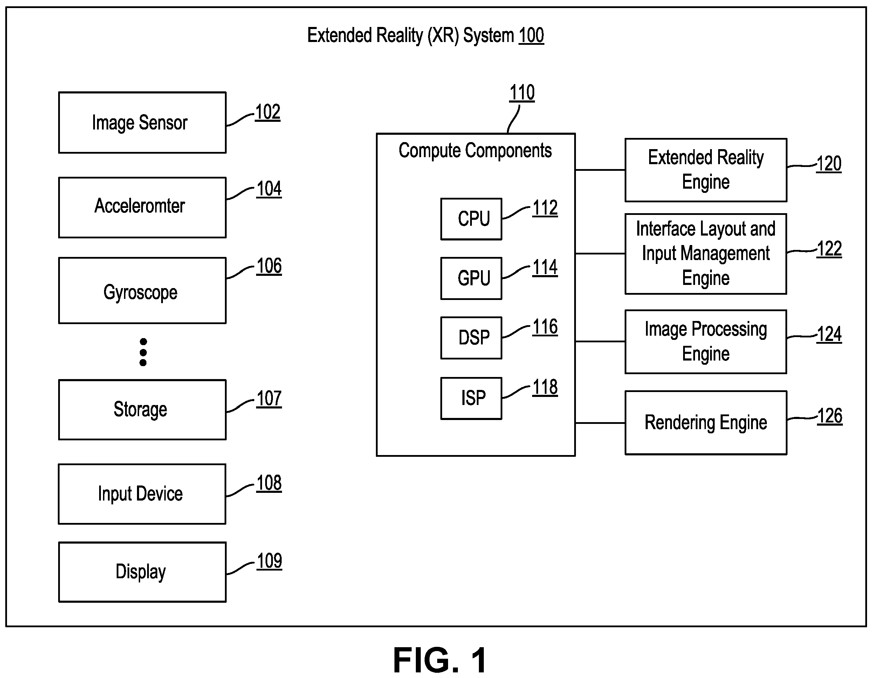

Various aspects of the application will be described with respect to the figures. FIG. 1 is a diagram illustrating an architecture of an example extended reality (XR) system 100, in accordance with some aspects of the disclosure. The XR system 100 can run (or execute) XR applications and implement XR operations. In some examples, the XR system 100 can perform tracking and localization, mapping of an environment in the physical world (e.g., a scene), and/or positioning and rendering of virtual content on a display 109 (e.g., a screen, visible plane/region, and/or other display) as part of an XR experience. For example, the XR system 100 can generate a map (e.g., a three-dimensional (3D) map) of an environment in the physical world, track a pose (e.g., location and position) of the XR system 100 relative to the environment (e.g., relative to the 3D map of the environment), position and/or anchor virtual content (e.g., digital media content, such as an eBook) in a specific location(s) on the map of the environment (e.g., on a display surface, such as pages of a physical book), and render the virtual content on the display 109 such that the virtual content appears to be at a location in the environment corresponding to the specific location on the map of the scene where the virtual content is positioned and/or anchored. For example, the XR system 100 can render text of eBook content so that it appears to be printed on the pages of a physical book. The display 109 can include a glass, a screen, a lens, a projector, and/or other display mechanism that allows a user to see the real-world environment and also allows XR content to be overlaid, overlapped, blended with, or otherwise displayed thereon.

In the illustrative example of FIG. 1, the XR system 100 includes one or more image sensors 102, an accelerometer 104, a gyroscope 106, storage 107, compute components 110, an XR engine 120, an interface layout and input management engine 122, an image processing engine 124, and a rendering engine 126. It should be noted that the components 102-126 shown in FIG. 1 are non-limiting examples provided for illustrative and explanation purposes, and other examples can include more, less, or different components than those shown in FIG. 1. For example, in some cases, the XR system 100 can include one or more other sensors (e.g., one or more inertial measurement units (IMUs), radars, light detection and ranging (LIDAR) sensors, radio detection and ranging (RADAR) sensors, sound detection and ranging (SODAR) sensors, sound navigation and ranging (SONAR) sensors. audio sensors, etc.), one or more display devices, one more other processing engines, one or more other hardware components, and/or one or more other software and/or hardware components that are not shown in FIG. 1. While various components of the XR system 100, such as the image sensor 102, may be referenced in the singular form herein, it should be understood that the XR system 100 may include multiple of any component discussed herein (e.g., multiple image sensors 102).

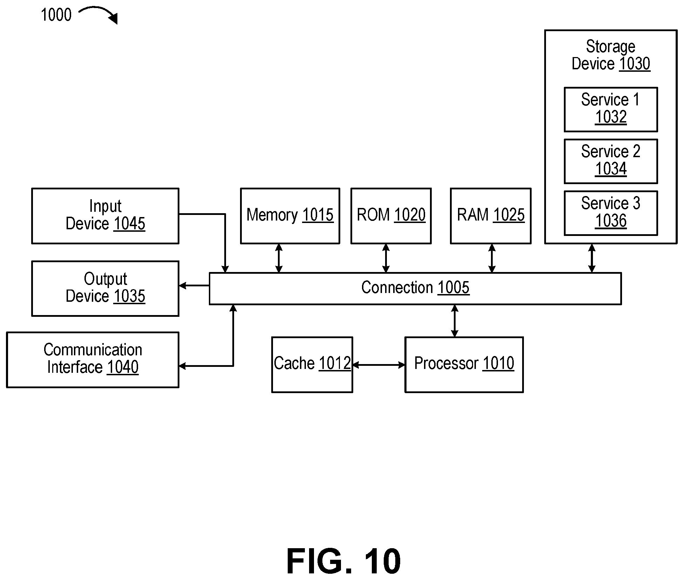

The XR system 100 includes or is in communication with (wired or wirelessly) an input device 108. The input device 108 can include any suitable input device, such as a touchscreen, a pen or other pointer device, a keyboard, a mouse a button or key, a microphone for receiving voice commands, a gesture input device for receiving gesture commands, a video game controller, a steering wheel, a joystick, a set of buttons, a trackball, a remote control, any other input device (e.g., input device 1045 shown in FIG. 10) discussed herein, or any combination thereof. In some cases, the image sensor 102 can capture images that can be processed for interpreting gesture commands.

In some implementations, the one or more image sensors 102, the accelerometer 104, the gyroscope 106, storage 107, compute components 110, XR engine 120, interface layout and input management engine 122, image processing engine 124, and rendering engine 126 can be part of the same computing device. For example, in some cases, the one or more image sensors 102, the accelerometer 104, the gyroscope 106, storage 107, compute components 110, XR engine 120, interface layout and input management engine 122, image processing engine 124, and rendering engine 126 can be integrated into an HMD, extended reality glasses, smartphone, laptop, tablet computer, gaming system, and/or any other computing device. However, in some implementations, the one or more image sensors 102, the accelerometer 104, the gyroscope 106, storage 107, compute components 110, XR engine 120, interface layout and input management engine 122, image processing engine 124, and rendering engine 126 can be part of two or more separate computing devices. For example, in some cases, some of the components 102-126 can be part of, or implemented by, one computing device and the remaining components can be part of, or implemented by, one or more other computing devices.

The storage 107 can be any storage device(s) for storing data. Moreover, the storage 107 can store data from any of the components of the XR system 100. For example, the storage 107 can store data from the image sensor 102 (e.g., image or video data), data from the accelerometer 104 (e.g., measurements), data from the gyroscope 106 (e.g., measurements), data from the compute components 110 (e.g., processing parameters, preferences, virtual content, rendering content, scene maps, tracking and localization data, object detection data, privacy data, XR application data, face recognition data, occlusion data, etc.), data from the XR engine 120, data from the interface layout and input management engine 122, data from the image processing engine 124, and/or data from the rendering engine 126 (e.g., output frames). In some examples, the storage 107 can include a buffer for storing frames for processing by the compute components 110.

The one or more compute components 110 can include a central processing unit (CPU) 112, a graphics processing unit (GPU) 114, a digital signal processor (DSP) 116, an image signal processor (ISP) 118, and/or other processor (e.g., a neural processing unit (NPU) implementing one or more trained neural networks). The compute components 110 can perform various operations such as image enhancement, computer vision, graphics rendering, extended reality operations (e.g., tracking, localization, pose estimation, mapping, content anchoring, content rendering, etc.), image and/or video processing, sensor processing, recognition (e.g., text recognition, facial recognition, object recognition, feature recognition, tracking or pattern recognition, scene recognition, occlusion detection, etc.), trained machine learning operations, filtering, and/or any of the various operations described herein. In some examples, the compute components 110 can implement (e.g., control, operate, etc.) the XR engine 120, the interface layout and input management engine 122, the image processing engine 124, and the rendering engine 126. In other examples, the compute components 110 can also implement one or more other processing engines.

The image sensor 102 can include any image and/or video sensors or capturing devices. In some examples, the image sensor 102 can be part of a multiple-camera assembly, such as a dual-camera assembly. The image sensor 102 can capture image and/or video content (e.g., raw image and/or video data), which can then be processed by the compute components 110, the XR engine 120, the interface layout and input management engine 122, the image processing engine 124, and/or the rendering engine 126 as described herein.

In some examples, the image sensor 102 can capture image data and can generate images (also referred to as frames) based on the image data and/or can provide the image data or frames to the XR engine 120, the interface layout and input management engine 122, the image processing engine 124, and/or the rendering engine 126 for processing. An image or frame can include a video frame of a video sequence or a still image. An image or frame can include a pixel array representing a scene. For example, an image can be a red-green-blue (RGB) image having red, green, and blue color components per pixel; a luma, chroma-red, chroma-blue (YCbCr) image having a luma component and two chroma (color) components (chroma-red and chroma-blue) per pixel; or any other suitable type of color or monochrome image.

In some cases, the image sensor 102 (and/or other camera of the XR system 100) can be configured to also capture depth information. For example, in some implementations, the image sensor 102 (and/or other camera) can include an RGB-depth (RGB-D) camera. In some cases, the XR system 100 can include one or more depth sensors (not shown) that are separate from the image sensor 102 (and/or other camera) and that can capture depth information. For instance, such a depth sensor can obtain depth information independently from the image sensor 102. In some examples, a depth sensor can be physically installed in the same general location as the image sensor 102, but may operate at a different frequency or frame rate from the image sensor 102. In some examples, a depth sensor can take the form of a light source that can project a structured or textured light pattern, which may include one or more narrow bands of light, onto one or more objects in a scene. Depth information can then be obtained by exploiting geometrical distortions of the projected pattern caused by the surface shape of the object. In one example, depth information may be obtained from stereo sensors such as a combination of an infrared structured light projector and an infrared camera registered to a camera (e.g., an RGB camera).

The XR system 100 can also include other sensors in its one or more sensors. The one or more sensors can include one or more accelerometers (e.g., accelerometer 104), one or more gyroscopes (e.g., gyroscope 106), and/or other sensors. The one or more sensors can provide velocity, orientation, and/or other position-related information to the compute components 110. For example, the accelerometer 104 can detect acceleration by the XR system 100 and can generate acceleration measurements based on the detected acceleration. In some cases, the accelerometer 104 can provide one or more translational vectors (e.g., up/down, left/right, forward/back) that can be used for determining a position or pose of the XR system 100. The gyroscope 106 can detect and measure the orientation and angular velocity of the XR system 100. For example, the gyroscope 106 can be used to measure the pitch, roll, and yaw of the XR system 100. In some cases, the gyroscope 106 can provide one or more rotational vectors (e.g., pitch, yaw, roll). In some examples, the image sensor 102 and/or the XR engine 120 can use measurements obtained by the accelerometer 104 (e.g., one or more translational vectors) and/or the gyroscope 106 (e.g., one or more rotational vectors) to calculate the pose of the XR system 100. As previously noted, in other examples, the XR system 100 can also include other sensors, such as an inertial measurement unit (IMU), a magnetometer, a gaze and/or eye tracking sensor, a machine vision sensor, a smart scene sensor, a speech recognition sensor, an impact sensor, a shock sensor, a position sensor, a tilt sensor, etc.

As noted above, in some cases, the one or more sensors can include at least one IMU. An IMU is an electronic device that measures the specific force, angular rate, and/or the orientation of the XR system 100, using a combination of one or more accelerometers, one or more gyroscopes, and/or one or more magnetometers. In some examples, the one or more sensors can output measured information associated with the capture of an image captured by the image sensor 102 (and/or other camera of the XR system 100) and/or depth information obtained using one or more depth sensors of the XR system 100.

The output of one or more sensors (e.g., the accelerometer 104, the gyroscope 106, one or more IMUs, and/or other sensors) can be used by the XR engine 120 to determine a pose of the XR system 100 (also referred to as the head pose) and/or the pose of the image sensor 102 (or other camera of the XR system 100). In some cases, the pose of the XR system 100 and the pose of the image sensor 102 (or other camera) can be the same. The pose of image sensor 102 refers to the position and orientation of the image sensor 102 relative to a frame of reference. In some implementations, the camera pose can be determined for 6-Degrees of Freedom (6DoF), which refers to three translational components (e.g., which can be given by X (horizontal), Y (vertical), and Z (depth) coordinates relative to a frame of reference, such as the image plane) and three angular components (e.g. roll, pitch, and yaw relative to the same frame of reference). In some implementations, the camera pose can be determined for 3-Degrees of Freedom (3DoF), which refers to the three angular components (e.g. roll, pitch, and yaw).

In some cases, a device tracker (not shown) can use the measurements from the one or more sensors and image data from the image sensor 102 to track a pose (e.g., a 6DoF pose) of the XR system 100. For example, the device tracker can fuse visual data (e.g., using a visual tracking solution) from the image data with inertial data from the measurements to determine a position and motion of the XR system 100 relative to the physical world (e.g., the scene) and a map of the physical world. As described below, in some examples, when tracking the pose of the XR system 100, the device tracker can generate a 3D map of the scene (e.g., the real world) and/or generate updates for a 3D map of the scene. The 3D map updates can include, for example and without limitation, new or updated features and/or feature or landmark points associated with the scene and/or the 3D map of the scene, localization updates identifying or updating a position of the XR system 100 within the scene and the 3D map of the scene, etc. The 3D map can provide a digital representation of a scene in the real/physical world. In some examples, the 3D map can anchor location-based objects and/or content to real-world coordinates and/or objects. The XR system 100 can use a mapped scene (e.g., a scene in the physical world represented by, and/or associated with, a 3D map) to merge the physical and virtual worlds and/or merge virtual content (e.g., eBook content) or objects with the physical environment (e.g., a book, newspaper, display surface etc.).

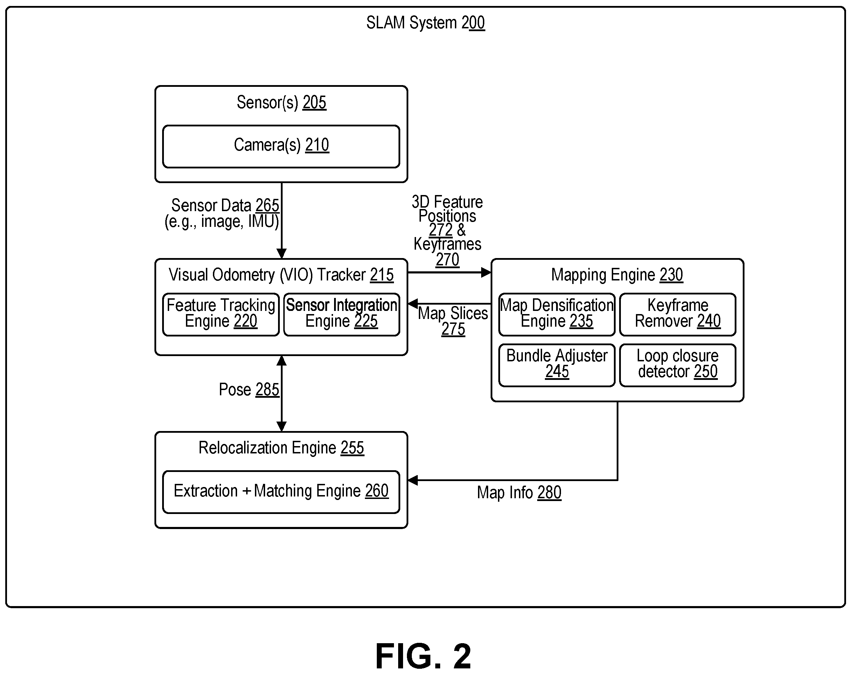

In some aspects, the pose of image sensor 102 and/or the XR system 100 as a whole can be determined and/or tracked by the compute components 110 using a visual tracking solution based on images captured by the image sensor 102 (and/or other camera of the XR system 100). For instance, in some examples, the compute components 110 can perform tracking using computer vision-based tracking, model-based tracking, and/or simultaneous localization and mapping (SLAM) techniques. For instance, the compute components 110 can perform SLAM or can be in communication (wired or wireless) with a SLAM system (not shown), such as the SLAM system 200 of FIG. 2. SLAM refers to a class of techniques where a map of an environment (e.g., a map of an environment being modeled by XR system 100) is created while simultaneously tracking the pose of a camera (e.g., image sensor 102) and/or the XR system 100 relative to that map. The map can be referred to as a SLAM map, and can be 3D. The SLAM techniques can be performed using color or grayscale image data captured by the image sensor 102 (and/or other camera of the XR system 100), and can be used to generate estimates of 6DoF pose measurements of the image sensor 102 and/or the XR system 100. Such a SLAM technique configured to perform 6DoF tracking can be referred to as 6DoF SLAM. In some cases, the output of the one or more sensors (e.g., the accelerometer 104, the gyroscope 106, one or more IMUs, and/or other sensors) can be used to estimate, correct, and/or otherwise adjust the estimated pose.

In some cases, the 6DoF SLAM (e.g., 6DoF tracking) can associate features observed from certain input images from the image sensor 102 (and/or other camera) to the SLAM map. For example, 6DoF SLAM can use feature point associations from an input image to determine the pose (position and orientation) of the image sensor 102 and/or XR system 100 for the input image. 6DoF mapping can also be performed to update the SLAM map. In some cases, the SLAM map maintained using the 6DoF SLAM can contain 3D feature points triangulated from two or more images. For example, key frames can be selected from input images or a video stream to represent an observed scene. For every key frame, a respective 6DoF camera pose associated with the image can be determined. The pose of the image sensor 102 and/or the XR system 100 can be determined by projecting features from the 3D SLAM map into an image or video frame and updating the camera pose from verified 2D-3D correspondences.

In one illustrative example, the compute components 110 can extract feature points from certain input images (e.g., every input image, a subset of the input images, etc.) or from each key frame. A feature point (also referred to as a registration point) as used herein is a distinctive or identifiable part of an image, such as a part of a hand, an edge of a table, among others. Features extracted from a captured image can represent distinct feature points along 3D space (e.g., coordinates on X, Y, and Z-axes), and every feature point can have an associated feature location. The feature points in key frames either match (are the same or correspond to) or fail to match the feature points of previously-captured input images or key frames. Feature detection can be used to detect the feature points. Feature detection can include an image processing operation used to examine one or more pixels of an image to determine whether a feature exists at a particular pixel. Feature detection can be used to process an entire captured image or certain portions of an image. For each image or key frame, once features have been detected, a local image patch around the feature can be extracted. Features may be extracted using any suitable technique, such as Scale Invariant Feature Transform (SIFT) (which localizes features and generates their descriptions), Learned Invariant Feature Transform (LIFT), Speed Up Robust Features (SURF), Gradient Location-Orientation histogram (GLOH), Oriented Fast and Rotated Brief (ORB), Binary Robust Invariant Scalable Keypoints (BRISK), Fast Retina Keypoint (FREAK), KAZE, Accelerated KAZE (AKAZE), Normalized Cross Correlation (NCC), descriptor matching, another suitable technique, or a combination thereof.

In some cases, the XR system 100 can also track the hand and/or fingers of the user to allow the user to interact with and/or control virtual content in a virtual environment. For example, the XR system 100 can track a pose and/or movement of the hand and/or fingertips of the user to identify or translate user interactions with the virtual environment. The user interactions can include, for example and without limitation, moving an item of virtual content, resizing the item of virtual content, selecting an input interface element in a virtual user interface (e.g., a virtual representation of a mobile phone, a virtual keyboard, and/or other virtual interface), providing an input through a virtual user interface, performing a gesture, etc.

FIG. 2 is a block diagram illustrating an architecture of a simultaneous localization and mapping (SLAM) system 200. In some examples, the SLAM system 200 can be, can include, or can be included in an extended reality (XR) system, such as the XR system 100 of FIG. 1. In some examples, the SLAM system 200 can be a wireless communication device, a mobile device or handset (e.g., a mobile telephone or so-called "smart phone" or other mobile device), a wearable device, a personal computer, a laptop computer, a server computer, a portable video game console, a portable media player, a camera device, a manned or unmanned ground vehicle, a manned or unmanned aerial vehicle, a manned or unmanned aquatic vehicle, a manned or unmanned underwater vehicle, a manned or unmanned vehicle, an autonomous vehicle, a vehicle, a computing system of a vehicle, a robot, another device, or any combination thereof.

The SLAM system 200 of FIG. 2 includes, or is coupled to, each of one or more sensors 205. The one or more sensors 205 can include one or more cameras 210. Each of the one or more cameras 210 may be responsive to light from a particular spectrum of light. The spectrum of light may be a subset of the electromagnetic (EM) spectrum. For example, each of the one or more cameras 210 may be a visible light (VL) camera responsive to a VL spectrum, an infrared (IR) camera responsive to an IR spectrum, an ultraviolet (UV) camera responsive to a UV spectrum, a camera responsive to light from another spectrum of light from another portion of the electromagnetic spectrum, or a combination thereof.

The one or more sensors 205 can include one or more other types of sensors other than cameras 210, such as one or more of each of: accelerometers, gyroscopes, magnetometers, inertial measurement units (IMUs), altimeters, barometers, thermometers, radio detection and ranging (RADAR) sensors, light detection and ranging (LIDAR) sensors, sound navigation and ranging (SONAR) sensors, sound detection and ranging (SODAR) sensors, global navigation satellite system (GNSS) receivers, global positioning system (GPS) receivers, BeiDou navigation satellite system (BDS) receivers, Galileo receivers, Globalnaya Navigazionnaya Sputnikovaya Sistema (GLONASS) receivers, Navigation Indian Constellation (NavIC) receivers, Quasi-Zenith Satellite System (QZSS) receivers, Wi-Fi positioning system (WPS) receivers, cellular network positioning system receivers, Bluetooth® beacon positioning receivers, short-range wireless beacon positioning receivers, personal area network (PAN) positioning receivers, wide area network (WAN) positioning receivers, wireless local area network (WLAN) positioning receivers, other types of positioning receivers, other types of sensors discussed herein, or combinations thereof. In some examples, the one or more sensors 205 can include any combination of sensors of the XR system 100 of FIG. 1.

The SLAM system 200 of FIG. 2 includes a visual-inertial odometry (VIO) tracker 215. The term visual-inertial odometry may also be referred to herein as visual odometry. The VIO tracker 215 receives sensor data 265 from the one or more sensors 205. For instance, the sensor data 265 can include one or more images captured by the one or more cameras 210. The sensor data 265 can include other types of sensor data from the one or more sensors 205, such as data from any of the types of sensors 205 listed herein. For instance, the sensor data 265 can include IMU data from one or more IMUs of the one or more sensors 205.

Upon receipt of the sensor data 265 from the one or more sensors 205, the VIO tracker 215 performs feature detection, extraction, and/or tracking using a feature tracking engine 220 of the VIO tracker 215. For instance, where the sensor data 265 includes one or more images captured by the one or more cameras 210 of the SLAM system 200, the VIO tracker 215 can identify, detect, and/or extract features in each image. Features may include visually distinctive points in an image, such as portions of the image depicting edges and/or corners (e.g., corners or edges of a physical book). The VIO tracker 215 can receive sensor data 265 periodically and/or continually from the one or more sensors 205, for instance by continuing to receive more images from the one or more cameras 210 as the one or more cameras 210 capture a video, where the images are video frames of the video. The VIO tracker 215 can generate descriptors for the features. Feature descriptors can be generated at least in part by generating a description of the feature as depicted in a local image patch extracted around the feature. In some examples, a feature descriptor can describe a feature as a collection of one or more feature vectors. The VIO tracker 215, in some cases with the mapping engine 230 and/or the relocalization engine 255, can associate the plurality of features with a map of the environment based on such feature descriptors. The feature tracking engine 220 of the VIO tracker 215 can perform feature tracking by recognizing features in each image that the VIO tracker 215 already previously recognized in one or more previous images, in some cases based on identifying features with matching feature descriptors in different images. The feature tracking engine 220 can track changes in one or more positions at which the feature is depicted in each of the different images. For example, the feature extraction engine can detect a particular corner of a room depicted in a left side of a first image captured by a first camera of the cameras 210. The feature extraction engine can detect the same feature (e.g., the same particular corner of the same room) depicted in a right side of a second image captured by the first camera. The feature tracking engine 220 can recognize that the features detected in the first image and the second image are two depictions of the same feature (e.g., the same particular corner of the same room), and that the feature appears in two different positions in the two images. The VIO tracker 215 can determine, based on the same feature appearing on the left side of the first image and on the right side of the second image that the first camera has moved, for example if the feature (e.g., the particular corner of the room) depicts a static portion of the environment.

The VIO tracker 215 can include a sensor integration engine 225. The sensor integration engine 225 can use sensor data from other types of sensors 205 (other than the cameras 210) to determine information that can be used by the feature tracking engine 220 when performing the feature tracking. For example, the sensor integration engine 225 can receive IMU data (e.g., which can be included as part of the sensor data 265) from an IMU of the one or more sensors 205. The sensor integration engine 225 can determine, based on the IMU data in the sensor data 265, that the SLAM system 200 has rotated 15 degrees in a clockwise direction from acquisition or capture of a first image to acquisition or capture of the second image by a first camera of the cameras 210. Based on this determination, the sensor integration engine 225 can identify that a feature depicted at a first position in the first image is expected to appear at a second position in the second image, and that the second position is expected to be located to the left of the first position by a predetermined distance (e.g., a predetermined number of pixels, inches, centimeters, millimeters, or another distance metric). The feature tracking engine 220 can take this expectation into consideration in tracking features between the first image and the second image.

Based on the feature tracking by the feature tracking engine 220 and/or the sensor integration by the sensor integration engine 225, the VIO tracker 215 can determine 3D feature positions 272 of a particular feature. The 3D feature positions 272 can include one or more 3D feature positions and can also be referred to as 3D feature points. The 3D feature positions 272 can be a set of coordinates along three different axes that are perpendicular to one another, such as an X coordinate along an X axis (e.g., in a horizontal direction), a Y coordinate along a Y axis (e.g., in a vertical direction) that is perpendicular to the X axis, and a Z coordinate along a Z axis (e.g., in a depth direction) that is perpendicular to both the X axis and the Y axis. The VIO tracker 215 can also determine one or more keyframes 270 (referred to hereinafter as keyframes 270) corresponding to the particular feature. In some examples, a keyframe (from the one or more keyframes 270) corresponding to a particular feature may be an image in which the particular feature is clearly depicted. In some examples, a keyframe corresponding to a particular feature may be an image that reduces uncertainty in the 3D feature positions 272 of the particular feature when considered by the feature tracking engine 220 and/or the sensor integration engine 225 for determination of the 3D feature positions 272. In some examples, a keyframe corresponding to a particular feature also includes data about the pose 285 of the SLAM system 200 and/or the camera(s) 210 during capture of the keyframe. In some examples, the VIO tracker 215 can send 3D feature positions 272 and/or keyframes 270 corresponding to one or more features to the mapping engine 230. In some examples, the VIO tracker 215 can receive map slices 275 from the mapping engine 230. The VIO tracker 215 can feature information within the map slices 275 for feature tracking using the feature tracking engine 220.

Based on the feature tracking by the feature tracking engine 220 and/or the sensor integration by the sensor integration engine 225, the VIO tracker 215 can determine a pose 285 of the SLAM system 200 and/or of the cameras 210 during capture of each of the images in the sensor data 265. The pose 285 can include a location of the SLAM system 200 and/or of the cameras 210 in 3D space, such as a set of coordinates along three different axes that are perpendicular to one another (e.g., an X coordinate, a Y coordinate, and a Z coordinate). The pose 285 can include an orientation of the SLAM system 200 and/or of the cameras 210 in 3D space, such as pitch, roll, yaw, or some combination thereof. In some examples, the VIO tracker 215 can send the pose 285 to the relocalization engine 255. In some examples, the VIO tracker 215 can receive the pose 285 from the relocalization engine 255.

The SLAM system 200 also includes a mapping engine 230. The mapping engine 230 generates a 3D map of the environment based on the 3D feature positions 272 and/or the keyframes 270 received from the VIO tracker 215. The mapping engine 230 can include a map densification engine 235, a keyframe remover 240, a bundle adjuster 245, and/or a loop closure detector 250. The map densification engine 235 can perform map densification, in some examples, increase the quantity and/or density of 3D coordinates describing the map geometry. The keyframe remover 240 can remove keyframes, and/or in some cases add keyframes. In some examples, the keyframe remover 240 can remove keyframes 270 corresponding to a region of the map that is to be updated and/or whose corresponding confidence values are low. The bundle adjuster 245 can, in some examples, refine the 3D coordinates describing the scene geometry, parameters of relative motion, and/or optical characteristics of the image sensor used to generate the frames, according to an optimality criterion involving the corresponding image projections of all points. The loop closure detector 250 can recognize when the SLAM system 200 has returned to a previously mapped region, and can use such information to update a map slice and/or reduce the uncertainty in certain 3D feature points or other points in the map geometry. The mapping engine 230 can output map slices 275 to the VIO tracker 215. The map slices 275 can represent 3D portions or subsets of the map. The map slices 275 can include map slices 275 that represent new, previously-unmapped areas of the map. The map slices 275 can include map slices 275 that represent updates (or modifications or revisions) to previously-mapped areas of the map. The mapping engine 230 can output map information 280 to the relocalization engine 255. The map information 280 can include at least a portion of the map generated by the mapping engine 230. The map information 280 can include one or more 3D points making up the geometry of the map, such as one or more 3D feature positions 272. The map information 280 can include one or more keyframes 270 corresponding to certain features and certain 3D feature positions 272.

The SLAM system 200 also includes a relocalization engine 255. The relocalization engine 255 can perform relocalization, for instance when the VIO tracker 215 fail to recognize more than a threshold number of features in an image, and/or the VIO tracker 215 loses track of the pose 285 of the SLAM system 200 within the map generated by the mapping engine 230. The relocalization engine 255 can perform relocalization by performing extraction and matching using an extraction and matching engine 260. For instance, the extraction and matching engine 260 can extract features from an image captured by the cameras 210 of the SLAM system 200 while the SLAM system 200 is at a current pose 285, and can match the extracted features to features depicted in different keyframes 270, identified by 3D feature positions 272, and/or identified in the map information 280. By matching these extracted features to the previously-identified features, the relocalization engine 255 can identify that the pose 285 of the SLAM system 200 is a pose 285 at which the previously-identified features are visible to the cameras 210 of the SLAM system 200, and is therefore similar to one or more previous poses 285 at which the previously-identified features were visible to the cameras 210. In some cases, the relocalization engine 255 can perform relocalization based on wide baseline mapping, or a distance between a current camera position and camera position at which feature was originally captured. The relocalization engine 255 can receive information for the pose 285 from the VIO tracker 215, for instance regarding one or more recent poses of the SLAM system 200 and/or cameras 210, which the relocalization engine 255 can base its relocalization determination on. Once the relocalization engine 255 relocates the SLAM system 200 and/or cameras 210 and thus determines the pose 285, the relocalization engine 255 can output the pose 285 to the VIO tracker 215.

In some examples, the VIO tracker 215 can modify the image in the sensor data 265 before performing feature detection, extraction, and/or tracking on the modified image. For example, the VIO tracker 215 can rescale and/or resample the image. In some examples, rescaling and/or resampling the image can include downscaling, downsampling, subscaling, and/or subsampling the image one or more times. In some examples, the VIO tracker 215 modifying the image can include converting the image from color to greyscale, or from color to black and white, for instance by desaturating color in the image, stripping out certain color channel(s), decreasing color depth in the image, replacing colors in the image, or a combination thereof. In some examples, the VIO tracker 215 modifying the image can include the VIO tracker 215 masking certain regions of the image. Dynamic objects can include objects that can have a changed appearance between one image and another. For example, dynamic objects can be objects that move within the environment, such as people, vehicles, or animals. A dynamic object can be an object that has a changing appearance at different times, such as a display screen that may display different things at different times. A dynamic object can be an object that has a changing appearance based on the pose of the camera(s) 210, such as a reflective surface, a prism, or a specular surface that reflects, refracts, and/or scatters light in different ways depending on the position of the camera(s) 210 relative to the dynamic object. The VIO tracker 215 can detect the dynamic objects using facial detection, facial recognition, facial tracking, object detection, object recognition, object tracking, or a combination thereof. The VIO tracker 215 can detect the dynamic objects using one or more artificial intelligence algorithms, one or more trained machine learning models, one or more trained neural networks, or a combination thereof. The VIO tracker 215 can mask one or more dynamic objects in the image by overlaying a mask over an area of the image that includes depiction(s) of the one or more dynamic objects. The mask can be an opaque color, such as black. The area can be a bounding box having a rectangular or other polygonal shape. The area can be determined on a pixel-by-pixel basis.

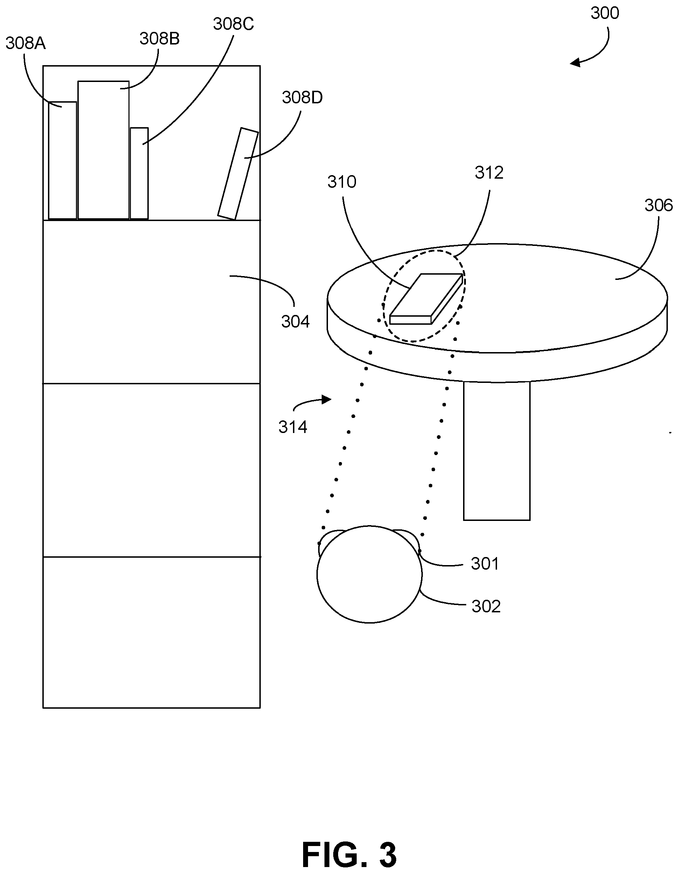

FIG. 3 illustrates an example environment containing physical books that can be used by an XR system 301 as a display surface for projecting digital media content. Although the examples below are described in terms of displaying eBook content on a physical book, the techniques described herein can similarly be used to display other types of digital media content such as video, photographs or the like. In some cases, the content can be displayed on other display surfaces, including but not limited to other printed media such as newspapers, magazines, comic books, or the like as well as other objects such as a projector screen, a wall, a table cloth, curtains, a ceiling, or the like. The XR system 301 can be an example of, can include portions of, and/or can be included in the XR system 100 of FIG. 1, the SLAM system 200 of FIG. 2, and/or the computing system 1000 of FIG. 10, variations thereof, or combinations thereof. In the illustrated example of FIG. 3, a user 302 wearing the XR system 301 can be located within the environment 300. In some examples, the XR system 301 can detect and map objects within the environment, (e.g., using the SLAM system of FIG. 2), including a bookshelf 304, a table 306, one or more physical books 308A, 308B, 308C, 308D located on the bookshelf 304, and a physical book 310 located on the table 306.

In some cases, the user may provide input requesting the XR system 301 to begin an eBook reading operation. In some cases, the user may provide the input to the XR system 301 through a user interface visible on a display (e.g., display 109 of FIG. 1) of the XR system 301. In some examples, the user 302 can request the XR system 301 to begin the eBook reading operation by performing a gesture. In some cases, once the XR system 301 begins the reading operation, the user 302 can select an eBook to read. In some examples, the eBook can be retrieved by the XR system 301 from a library stored within the XR system storage (e.g., storage 107 of FIG. 1, system memory 1015 of FIG. 10, or storage device 1030 of FIG. 10) and/or from a remote storage location. In some cases, after the user selects an eBook to read, the XR system 301 can begin a detection operation for detecting a suitable display surface for displaying the eBook content. In some examples, the XR system 301 can detect each of the books 308A, 308B, 308C, 308D and 310 within the environment 300 and provide an interface for the user 302 to select from among the detected books to use as a display surface. In some cases, the user 302 may have the option to share the selected eBook content with another user that is also using an XR system within the same environment 300.

In some cases, the XR system 301 can identify one or more of the physical books 308A, 308B, 308C, 308D, 310 by, for example, detecting writing and/or illustrations on the covers and/or dust jackets of the books. In some cases, the XR system 301 can obtain information about the books, such as font size, page count, page size, or the like from a database. In some implementations, the database can be stored in storage of the XR system 301 and/or retrieved from a remote storage location. In some cases, based on the characteristics of the user selected eBook and the information obtained about the physical books 308A, 308B, 308C, 308D, 310, the XR system 301 can provide a recommendation for which of the available physical books may provide the best reading experience for the selected eBook. For example, the XR system 301 may recommend a physical book that has a sufficient number pages to display all of the content of the selected eBook. In some cases, based on the pose of the XR system 301 and/or the location of a particular physical book 310 near the center of the user's field of view and/or gaze direction 314, the XR system 301 can highlight 312 or otherwise emphasize a particular physical book 310 and provide a prompt to the user 302 with an option to select the emphasized book as the desired display surface. In some cases, if the user 302 selects a particular physical book 310 as the display surface and the selected physical book is closed, the XR system 301 can prompt the user 302 to open the physical book. In some examples, once the user selects a display surface, the XR system 301 can begin to determine a display area on the display surface for projecting the selected eBook content.

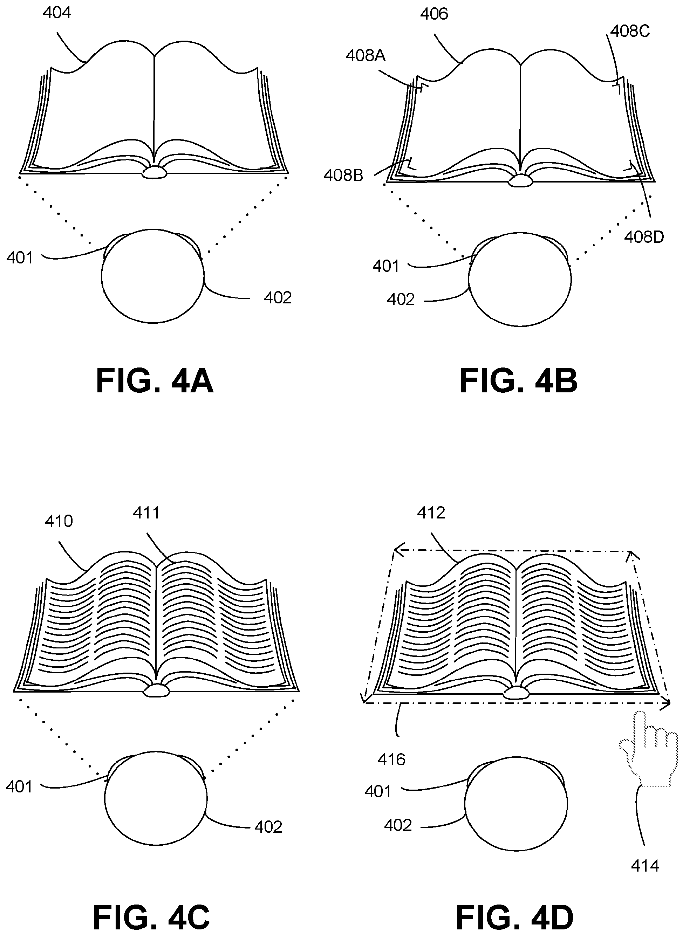

FIG. 4A, FIG. 4B, FIG. 4C and FIG. 4D illustrate example display surfaces and techniques for detecting a display area for displaying digital media content on display surfaces. FIG. 4A illustrates an example display surface 404 that includes a physical book with blank pages that can be used as a display surface for projecting and/or rendering digital media content (e.g., an eBook) by an XR system 401. In some cases, after the user 402 has selected the display surface 404 as the desired display surface, the XR system 401 can determine a display area on the display surface 404 for displaying the digital media content. In some cases, the display area can include the entire area of two opposing pages of a book, for example. In some implementations, the XR system 401 can detect one or more of the edges of pages, the cover, the binding, and/or any other features of the display surface 404 to determine the display area for displaying the digital media content.

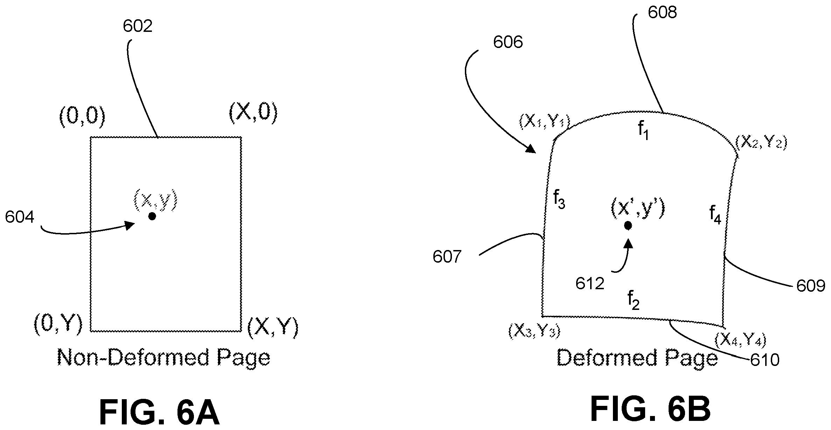

FIG. 4B illustrates an example display surface 406 that includes a blank book having guide markings 408A, 408B, 408C, 408D that can be used to aid detection of the display surface 406 by the XR system 401. In the illustrated example, the guide markings 408A through 408D are illustrated as small curves or right angles positioned near the four corners of the display surface 406. In some cases, the XR system 401 can detect the guide markings 408A through 408D in order to detect the display surface 406. In some cases, the guide markings 408A through 408D can also be used to aid in detecting contours of the pages (also referred to as a deformation model) of the display surface 406, as will be discussed in more detail below with regard to FIG. 6A through FIG. 6D. Although the guide markings 408A through 408D are illustrated as small curves or right angles located in four corners of the display surface, it should be understood that the markings can have other shapes, there can be more (e.g., four markings per page, eight markings per page, ten markings per page) or fewer (e.g., one, two, or three markings) markings, and/or the markings can be placed in different locations on the display surface 406 without departing from the scope of the present disclosure. In some cases, the markings can be disposed on pages of the book in a way that is only visible to sensors included in the XR system 401 (e.g., one or more sensors 205 of FIG. 2), such as a near-infrared sensor included in the XR system 401. In some cases, although the markings may be visible during detection of the display surface 406, after the XR system 401 begins to display the media content (e.g., the eBook) on the display surface 406, the guide markings 408A through 408D may be masked, obscured, or otherwise no longer be visible to the user 402.

FIG. 4C illustrates an example display surface 410 that includes a physical book with pre-existing printed text 411 (represented as curved lines). In the example of FIG. 4C, in addition to detecting features of the book such as edges, contours, binding, cover, etc., the XR system 401 can detect the presence of text 411 as another feature for identifying the display area of the display surface 410 as a book that can be used for displaying the media content. In some cases, the XR system 401 may be able to recognize the content of the physical book and retrieve information about the physical book from storage included in the XR system 401 and/or from a remote storage location. In some cases, the text 411 printed on the display surface 410 can also be used to determine a display area for displaying the digital media content on the display surface 410. In some cases, the text 411 can also be used to determine a deformation model of the pages of the display surface 410 (e.g., modeling curvature of the pages) as will be described in more detail below with respect to FIG. 6A through FIG. 6D.

FIG. 4D illustrates another example display surface 412 that includes a book with pre-existing printed text similar to example display surface 410. Just as with display surface 410, the display surface 412 can be any printed book. In some cases, the XR system 401 can detect a user input to assist the XR system 401 with detection of the display area and/or the display surface 412. In one illustrative example, the user 402 can perform a gesture (e.g., using hand 414) that includes tracing a boundary 416 around the edges of the display surface 412. In another example (not shown), the user 402 can tap a finger on one of the pages of the display surface 412 to identify the desired display area for displaying the digital media content. Although two specific types of user input are described for assisting the XR system 401 with detection of the display area and/or display surface 412, it should be understood that many other user inputs, including additional gestures, inputs through a user-interface of the XR system 401, inputs provided using an input device (e.g., input device 108 of FIG. 1), or the like, can be used without departing from the scope of the present disclosure. In some cases, once the display surface has been selected, the XR system 401 can project the selected eBook content with the appearance that the eBook content is printed on the display surface (e.g., pages of the physical book).

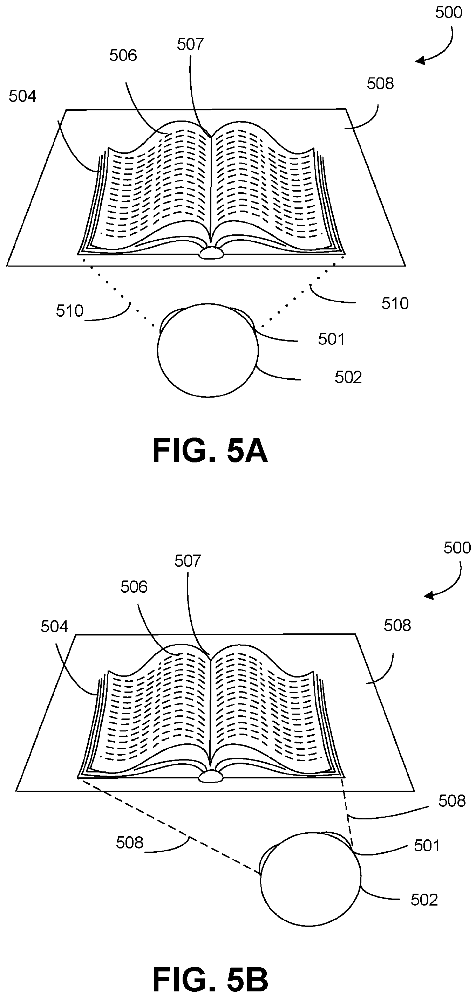

FIG. 5A and FIG. 5B illustrate examples of an XR system 501 projecting digital media content 506 onto pages of a physical book 504. In the illustrated example of FIG. 5A, digital media content 506 onto the pages of the physical book 504. In the illustrations of FIG. 5A and FIG. 5B, projected digital media content 506 (e.g., the text of an eBook) is depicted as dashed lines, in contrast to the solid lines used to depict printed text in FIG. 4C and FIG. 4D. As described above with respect to the XR system 100 of FIG. 1 and the SLAM system 200 of FIG. 2 the location of the physical book 504 may be detected (e.g., by feature tracking engine 220) and included in a map (e.g., by mapping engine 230) of the environment 500. In the illustrated example, the physical book 504 can be stationary on a desk 508. In some cases, the XR system 501 can determine a display area for displaying digital media content on the physical book 504 (e.g., as described with respect FIG. 4A through FIG. 4D). In some cases, the map of the environment 500 generated by the XR system 501 can include locations of both the physical book 504 and the desk 508 in a mapping of the environment 500. The XR system 501 can also determine a pose of the XR system 501 and/or the user's head as described with respect to FIG. 2 above. For example, with 6DoF tracking, the XR system 501 can track the user 502 moving forward, backward, laterally and/or vertically as well as tracking the user 502 of the XR system 501 turning their head left or right, tilting their head up or down, and/or tilting their head to the left or right. In the illustration of FIG. 5A, the user 502 is positioned approximately centered relative to the midline 507 of the physical book 504 and the gaze 510 of the user (as indicated by dotted lines) is in the direction of the physical book 504. In some implementations, the XR system 501 can project or render the digital media content 506 onto the pages of the physical book 504 based on the detected and/or mapped location of the physical book 504, the detected pose of the user 502, and/or both.

FIG. 5B depicts the user 502 with a new pose in the environment 500 relative to the physical book 504 and the desk 508. As illustrated, from the perspective of the user 502, the digital media content 506 projected and/or rendered by the XR system 501 can remain fixed on the pages of the physical book 504 as though the digital media content 506 is printed on the pages of the physical book. In some cases, the XR system 501 can update information about the pose of the user 502 as the user moves within the environment 500 (e.g., using 6DoF tracking). In some cases, when the XR system 501 detects a change in the pose of the user 502, the location of the projection and/or rendering of the digital media content can be updated accordingly. In the illustration of FIG. 5B, the user 502 is positioned to the right of center of the midline of the physical book 504. From the position of the user 502 illustrated in FIG. 5B, the left page of the physical book 504 can be slightly farther away from the user than the right page of the physical book 504. The XR system 501 can modify the display of the digital media content 506 (e.g., an eBook) to match the appearance of real text printed on a page of the physical book. For example, text on the right page of the physical book 504 may be projected and/or rendered by the XR system 501 to appear slightly larger than text on the left page of the physical book 504.

In some cases, the physical book 504 can also move and/or change in pose within the environment 500. For example, a user may hold the physical book 504 while reading the eBook content. In such cases, the XR system can simultaneously track changes in the pose of the physical book 504 and the pose of the XR system 501 and modify or maintain display of the digital media content 506 to remain anchored to the pages of the physical book 504.

In some cases, the XR system 501 can provide uniform illumination across the entire displayed digital media content 506. In some cases, external lighting may not be required for the digital media content 506 projected or rendered by the XR system 501 to be visible to the user 502. For example, the user 502 could view the digital media content 506 (e.g., an eBook) displayed on the pages of the physical book 504 in a dark room without disturbing others around them. In some cases, a user may wish to view the digital media content 506 with more realistic lighting conditions to attain a reading experience more consistent with reading a physical book. For example, under some lighting conditions, the midline 507 of the physical book 504 can appear darker than other portions of the pages due to shadows caused by the contours of the pages of the book and the location, brightness, and/or illumination characteristics of lighting sources in the environment 500. In some cases, the XR system 501 can include information about location, brightness, and/or characteristics of lighting sources within a map of the environment 500 that the user 502 is occupying. In some implementations, the XR system 501 can replicate and/or emulate the lighting conditions of the environment 500 in the projection of the digital media content 506. In one illustrative example, digital media content 506 can be displayed with a shadow near the midline 507 of the physical book 504 to emulate lighting conditions of the environment 500. In some cases, the XR system 501 can update the lighting conditions of the page based on detected changes to the pose of the user 502 relative to the physical book 504.

As illustrated in FIG. 5A and FIG. 5B, the pages of physical book 504 can have a curvature based on, for example, the type of binding, the height, width, and thickness of the book pages, the degree to which the book is open (e.g., the angle between opposing pages), and the way the user 502 is manipulating the pages of the book. In some cases, in order to conform display of the digital media content 506, the XR system 501 can determine a deformation model to represent the curvature of the book pages.

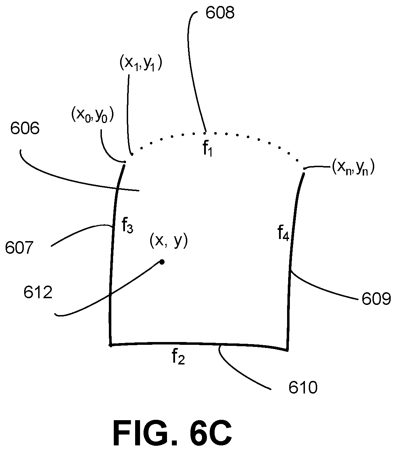

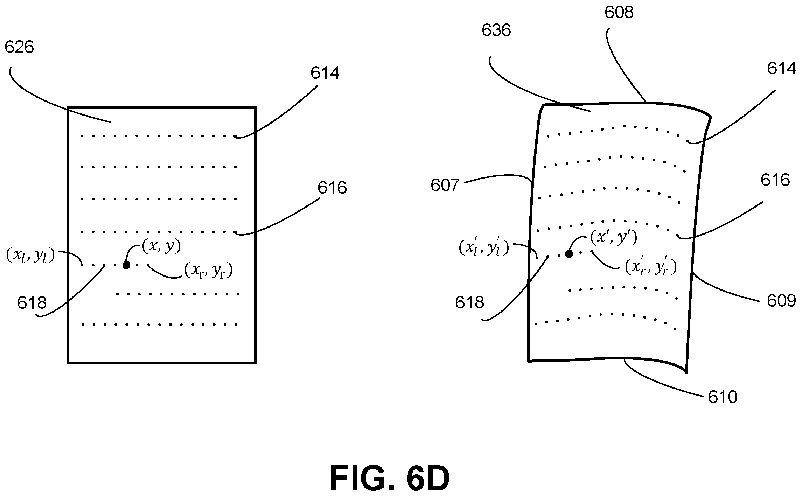

FIG. 6A, FIG. 6B, FIG. 6C, FIG. 6D illustrate example techniques for detecting and modeling deformation of a display surface (e.g., pages of a physical book, a newspaper, or the like). For purposes of illustration, the examples of FIG. 6A through FIG. 6D depict only a single page of a book. However, it should be understood that the same or similar techniques can be applied to two opposing pages of a book, as well as any other display surfaces that may experience deformation such as newspapers, magazines, comic books, curtains, or the like.

As illustrated in FIG. 6A, a non-deformed page 602 represents a page that is perfectly flat without any deformation. The non-deformed page 602 has a width of X and a height of Y. In the illustrated example, the width X and height Y can indicate, for example, of a number of pixels in an image of the non-deformed page 602. In some cases, the width of X and height of Y can represent a number of inches, centimeters, millimeters, or another distance metric. In some cases, the image of the non-deformed page 602 can be captured by one or more cameras (e.g., image sensors 102 of FIG. 1 and/or cameras 210 of FIG. 2) included in an XR system such as XR system 100 of FIG. 1, SLAM system 200 of FIG. 2, XR system 401 of FIG. 4A through FIG. 4D, and/or XR system 501 of FIG. 5A and FIG. 5B. As illustrated, the top-left pixel of the page 602 is located at pixel position or location (0, 0) and the bottom-right pixel of the page 602 is located at a pixel position or location (X, Y). In some cases, the location (0, 0) can correspond to the top of the midline between opposing pages of a physical book and the non-deformed page 602 can represent a right-hand page of two opposing pages. In such an implementation, pixel locations left of the midline of the physical book can have negative x-coordinate values. In some aspects, the location (0, 0) can correspond to the top-left corner of the left hand page of two opposing pages of a book and the non-deformed page 602 can represent a left-hand page of two opposing pages. In such implementations, the x-coordinates of all pixel locations corresponding to the physical book can have positive values.

In some cases, a pixel 604 displayed on the non-deformed page 602 can include a pixel location (x, y), which can represent a distance of x pixels from the left edge of the non-deformed page 602 and a distance of y pixels from the top edge of the non-deformed page 602. The pixel 604 can represent, for example, a dot on a low case letter "i" in the text of an eBook displayed by an XR device.

FIG. 6B illustrates an example of a deformed page 606, which can result from a bend or curvature applied to the non-deformed page 602 of FIG. 6A. As illustrated, due to deformation of the page, the top-left pixel of the deformed page 606 is located at pixel position or location $(X_1, Y_1)$, the top-right pixel of the deformed page 606 is located at pixel position or location $(X_2, Y_2)$, the bottom-left pixel of the deformed page 606 is located at pixel position or location $(X_3, Y_3)$, and the bottom-right pixel of the page 606 is located at a pixel position or location $(X_4, Y_4)$. In some cases, an XR system can change the projection of digital media content projected on deformed page 606 to retain the appearance that the projected media content is located on the deformed page. In some cases, the pixel 612 can represent a same portion of text of an eBook as the pixel 604 (e.g., the dot of the letter "i") displayed on the deformed page 606. In some cases, a deformation model of the deformed page 606 can be generated by an XR system. The location of the pixel 612 on the deformed page can be determined by applying the deformation model to the non-deformed page 602. In some cases, based on the deformation model, the pixel 604 of the non-deformed page 602 can be projected to a corresponding location of pixel 612 on the deformed page at pixel location (x', y'). In some cases, x' can be different from x and/or y' can be different from y.

As shown in FIG. 6C, feature points associated with the top edge 608 of the deformed book page detected by the XR system (e.g., by the feature tracking engine 220 of FIG. 2) can be represented as a plurality of pixel locations $(x_0, y_0)$, $(x_1, y_1)$, through $(x_n, y_n)$. In some implementations, the curvature model of the top edge 608 can be modeled by fitting the detected pixel locations $(x_0, y_0)$, $(x_1, y_1)$, through $(x_n, y_n)$ of the top edge 608 using a polynomial model shown in Equation (1.a) below which approximates a curved line that passes through pixels $(x_0, y_0)$, $(x_1, y_1)$, through $(x_n, y_n)$:

$$y = f_1(x) = \sum_{i=0}^{N} a_{1,i} x^i \qquad (1.a)$$

Where N is an integer greater than zero that represents the order of the polynomial selected for fitting the curve. For example, for N = 2, the function $f_1$ becomes:

$$y = f_1(x) = a_{1,0} + a_{1,1} x + a_{1,2} x^2 \qquad (2)$$

The XR system can determine the best curve fitting to the top edge 608 by the coefficients $a_{1,0}$, $a_{1,1}$, through $a_{1,N}$ in Equation (1.a) to minimize a mean square error (MSE) between the modeled curve and the detected pixel locations $(x_0, y_0)$, $(x_1, y_1)$, through $(x_n, y_n)$ of the page boundary. In some examples, minimizing the MSE can also include determining which value of N will provide the best fit for different curvatures of the deformed page 606. In some cases, N is chosen based on a tradeoff between accuracy and tolerance to noise. In some examples, as N is increased, the curve fit can more accurately describe the model and/or provide a better fit to the pixel position data measured at the page boundary. However, as N is increased, the curve fit can become more sensitive to measurement noise (e.g., errors in the measured pixel locations of the page boundary). In one illustrative implementation, an error between the curve fit and the measured pixel locations of a page boundary (e.g., top edge 608) can be compared with an error threshold E. In some cases, the value for N can be set to the smallest value of N that brings the error below the error threshold E. As the XR system detects changes in curvature of the deformed page 606, the deformation model can be updated to keep the projection of digital media content (e.g., the eBook text) on the surface of the deformed page 606. In some cases, the top edge 608 of the deformed page 606 can be represented by a first deformation model $f_1$. In some cases, pixel points associated with the bottom edge 610 of the deformed page 606 can similarly be detected and fit to a curve to determine a deformation model $f_2$ for the curvature of the bottom edge 610. Equation (1.b) below provides an example deformation model $f_2$:

$$y = f_2(x) = \sum_{i=0}^{N} a_{2,i} x^i \qquad (1.b)$$

Where $a_{2,0}$, $a_{2,1}$, through $a_{2,N}$ are the coefficients for the deformation model $f_2$.

In some cases, pixel points associated with the left edge 607 and/or right edge 609 of the deformed page 606 can similarly be detected and fit to curve(s) for the left edge 607 and/or the right edge 609. In one illustrative example, Equation (1.c) below can be used to determine a deformation model $f_3$ for the curvature of the left edge 607.

$$x = f_3(y) = \sum_{i=0}^{N} b_{3,i} y^i \qquad (1.c)$$

Where $b_{3,0}$, $b_{3,1}$, through $b_{3,N}$ are the coefficients for the deformation model $f_3$.

In another illustrative example, Equation (1.d) below can be used to determine a deformation model $f_4$ for the curvature of the right edge 609.

$$x = f_4(y) = \sum_{i=0}^{N} b_{4,i} y^i \qquad (1.d)$$

Where $b_{4,0}$, $b_{4,1}$, through $b_{4,N}$ are the coefficients for the deformation model $f_4$.

Although an example polynomial fitting technique using one or more of Equation (1.a) through Equation (1.d) is described above for fitting a curve to the pixel locations of the top edge 608, bottom edge 610, left edge 607 and/or right edge 609 of a deformed page 606 to determine corresponding deformation models $f_1$, $f_2$, $f_3$ $f_4$, it should be understood that any suitable curve fitting technique can be used to create a model for the boundaries of the book and/or pages of the book. For example, other functions such as Gaussian functions, trigonometric functions (e.g., sine and cosine), or sigmoid function, or any combination thereof, can be used without departing from the scope of the present disclosure. While the example technique for generating a deformation model above focuses on the use of the top edge 608, bottom edge 610, left edge 607, and right edge 607 of a book page, any features (e.g., corners, edges, printed text, special markings, shadows etc.) associated with the book page can be used to determine deformation models for features of a physical book page. In some implementations, a neural network can be trained to determine a deformation model for features of the physical book page.

In some implementations, a combined model for determining the location (x', y') of pixel 612 on deformed page 606 that corresponds to the location (x, y) of pixel 604 on the non-deformed page 602 can be determined using interpolation between the deformation model $f_1$ for the top edge 608 and the deformation model $f_2$ for the bottom edge 610 and interpolation between the deformation model $f_3$ for the left edge 607 and the deformation model $f_4$ for the right edge 609 of deformed page 606 according to Equation (3) and Equation (4) below:

$$x' = f_3\left(\frac{y}{Y} \cdot (Y_3 - Y_1)\right) \cdot \frac{X-x}{X} + f_4\left(\frac{y}{Y} \cdot (Y_4 - Y_2)\right) \cdot \frac{x}{X} \qquad (3)$$

$$y' = f_1\left(\frac{x}{X} \cdot (X_2 - X_1)\right) \cdot \frac{Y-y}{Y} + f_2\left(\frac{x}{X} \cdot (X_4 - X_3)\right) \cdot \frac{y}{Y} \qquad (4)$$

Where Y is the height of the non-deformed page 602, y is the y-coordinate location of the pixels on the non-deformed page 602, X is the width of the non-deformed page 602, and x is the coordinate location of the pixels on the non-deformed page. For example, the result of Equation (3) can provide the projected x-coordinate for pixel 612 on the deformed page 606 and Equation (4) can provide the projected y-coordinate for pixel 612 on the deformed page 606 that corresponds to the location (x, y) of pixel 604 on the non-deformed page 602.

FIG. 6D illustrates an example technique for determining a deformation model based on text characters printed on the pages of a printed book. In some examples, an XR system can determine deformation models for one or more lines of text if the printed book has text on it instead of being a blank book. As illustrated in FIG. 6D, a non-deformed page 626 can include one or more lines of text 614, 616, 618 and a corresponding deformed page 636 can include the same one or more lines of text 614, 616, 618. In some examples, the one or more of the lines of text 614, 616, 618 on the deformed page 636 can be fit using a polynomial curve fitting such as the polynomial curve fittings shown in Equation (1.a) through Equation (1.d). In one illustrative example, each character of each line of text can be segmented out and a character center location $(x_{c,k}, y_{c,k})$ of the k-th character of the line can be determined according to Equation (5) and Equation (6) below:

$$x_{c,k} = \frac{\sum_{i=1}^{N} x_{i,k}}{N} \qquad (5)$$

$$y_{c,k} = \frac{\sum_{i=1}^{N} y_{i,k}}{N} \qquad (6)$$

Where N is the total number of pixels making up a character and $(x_{i,k}, y_{i,k})$ is the (x,y) coordinate of the i-th pixel on the k-th character. In some cases, deformation models for the lines of text 614, 616, 618 on the deformed page 636 can be generated by a fitting a curve through the character center locations. For example, Equation (1.a) or Equation (1.b) can be

17

used for the deformation model of horizontal text lines such as lines of text 614, 616, 618.

In some cases, once one or more deformation models for the lines of text 614, 616, 618 have been calculated, digital media content (e.g., the text of an eBook) can be projected onto the deformed page 636 based on the deformation model. In one illustrative example, the pixel locations for lines of text projected on the deformed page 636 can be determined based on interpolation of the x-coordinate of the pixel and predicted y-coordinate using model Equation (1.a) or Equation (1.b).

In one illustrative example, for a pixel that would be projected at the location (*x, y*) on a non-deformed page 626, a corresponding *x'* value for projecting the pixel on the deformed page 636 can be determined through interpolation according to Equation (7) below:

$$x' = x_l' + \frac{x}{x_r - x_l} \cdot (x_r' - x_l') \qquad (7)$$

In some implementations, after determining, *x'*, the value for *y'* can be obtained by use of the deformation model shown in Equation (8) below:

$$y' = f(x') = \sum_{i=0}^{N} a_i x'^i \qquad (8)$$

Where (*x_l, y_l*) and (*x_r, y_r*) are respectively the pixel coordinates of the left-most and right-most pixel that would be used to project a text line on the non-deformed page 636 and ( $x_l'$, $y_l'$ ) and ( $x_r'$, $y_r'$ ) are respectively the pixel coordinates of the left-most and right-most pixel of the text line 618 on the deformed page 636. In another illustrative example, the projected pixel locations for text displayed on the deformed page 606 can be determined based on interpolation between deformation models of one or more horizontal lines of text, one or more vertical lines of text, top edge 608, bottom edge 610, left edge 607 and right edge 609, or any combination thereof. Although examples of determining deformation models based on the top edge 608, bottom edge 610, left edge 607 and right edge 609, and one or more lines of text of a physical book are provided herein, it should be understood that deformation models based on a variety of features (e.g., shadows, special markings for assisting in detection of the display area, and/or other features) of a physical book can be used to determine a deformation model of physical book pages without departing from the scope of the present disclosure. In addition, similar techniques can be used for determining deformation models for a display surface other than a physical book based on detected features of the display surface without departing from the scope of the present disclosure.

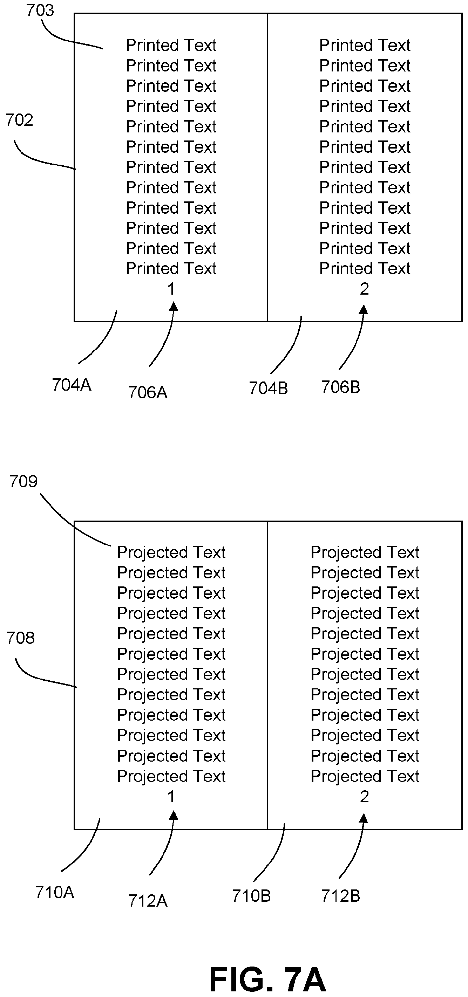

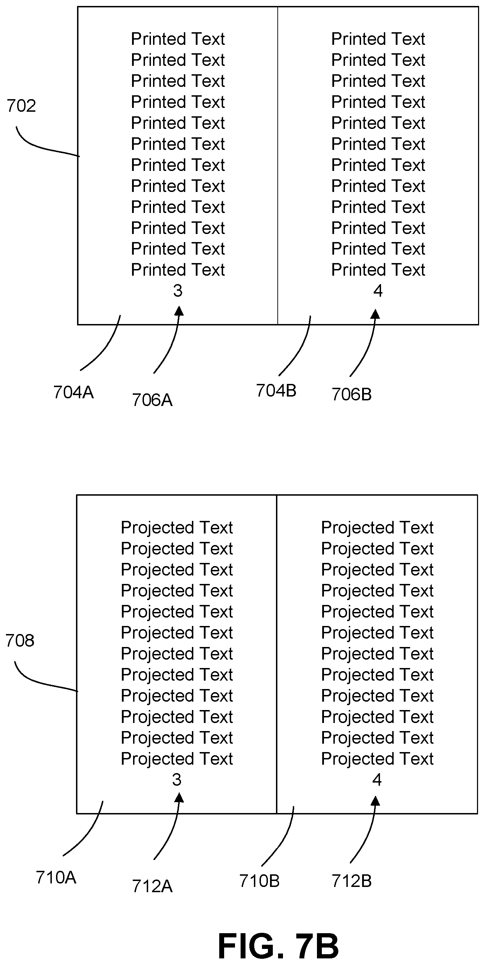

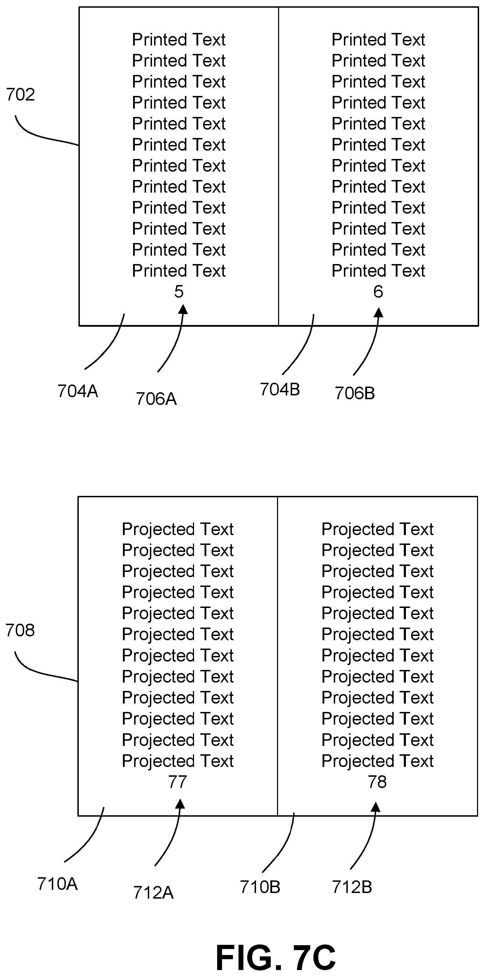

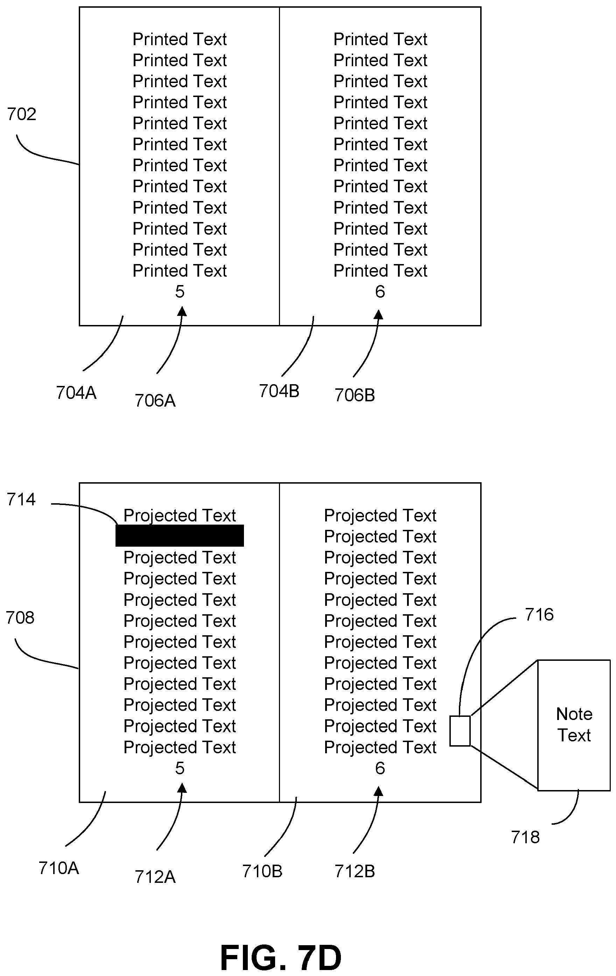

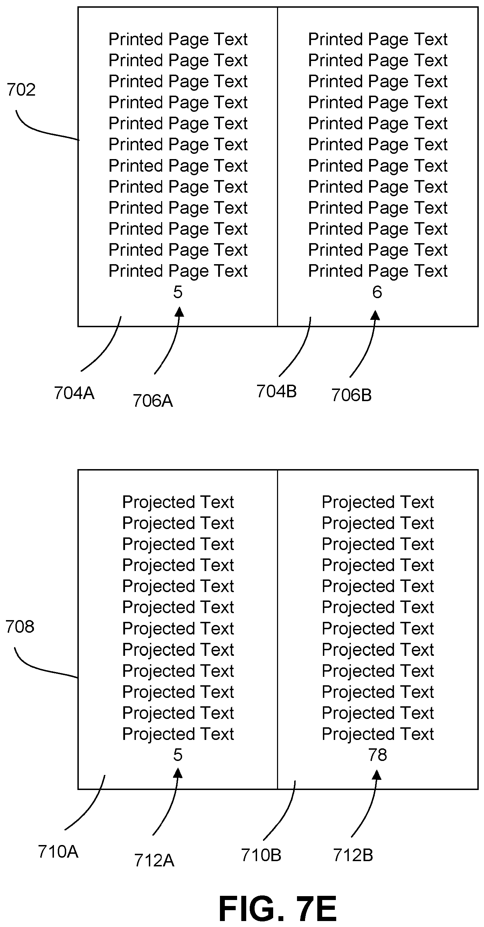

FIG. 7A, FIG. 7B, FIG. 7C, FIG. 7D, and FIG. 7E illustrate examples of user interactions with projected eBook content displayed on pages of a physical book 702. In each of the examples below, the interactions can be performed by the XR system 100 of FIG. 1, the SLAM system 2 of FIG. 2, the XR system 401 of FIG. 4A through FIG. 4D, the XR system 501 of FIG. 5A and FIG. 5B, and/or any portions, variations, or combinations thereof.

Each of the figures FIG. 7A through FIG. 7E include a representation of physical book 702 with a left page 704A and a right page 704B with printed text included on each page and example page numbers 706A and 706B. FIG. 7A through FIG. 7E also include a representation of projected or rendered text of an eBook 708 with a left page 710A and a right page 710B with page numbers 712A and 712B that can be projected by an XR system onto the physical book 702 as described throughout the present disclosure.

FIG. 7A illustrates an example appearance of projected text 709 of an eBook displayed on the page of a physical book 702 (e.g., a display surface) with existing printed text 703. In some examples, the eBook content can be sized to match to physical dimensions of the printed book page. In some cases, the eBook content can be sized so that the amount of text displayed on each page is consistent with the pagination of a print version of the eBook content. For example, the font size, column width, and/or spacing between lines of text of the eBook content can be adjusted to achieve the desired appearance of the rendered text of the eBook content on the page of the physical book.

FIG. 7A and FIG. 7B together illustrate an example of the result of a page flipping operation that can advance the eBook content based on a user physically flipping pages of the physical book 702. In some aspects, an XR system can determine that a user has flipped the pages of the physical book 702, and can advance or reverse the displayed pages of the eBook 708 based on the detected page flipping. In FIG. 7A the displayed page numbers 706A and 706B of the physical book 702 are one and two and the page numbers 712A and 712B of the eBook are shown with matching page numbers one and two. FIG. 7B illustrates the pages 704A and 704B of the physical book 702 and the pages 710A and 710B eBook both advanced by a single page turn, where pages three and four of the eBook 708 are projected onto pages three and four of the physical book 702.

FIG. 7C illustrates an example of the page numbers 706A and 706B of the physical book not matching the page numbers 712A, 712B of the eBook 708. In some examples, a user may advance the pages of the eBook 708 without turning the page of the physical book 702. In such an example, as the page numbers 712A, 712B and of the eBook 708 are advanced without turning the pages of the physical book 702, the page numbers 712A and 712B of the eBook can increment while the page numbers 706A, 706B of the physical book stay fixed. In some cases, the user may advance the eBook 708 content by performing a gesture, such as a swiping motion or tapping once on the edge of a page, selecting a desired page from a user interface, a combination thereof, and/or through other means. In some implementations, the user may be provided with additional options for moving forward and/or backward through the eBook 708 content. For example, a user can perform a specific gesture (e.g., tapping a page three times in quick succession) in order to move forward or backward in the book by a predetermined number of pages (e.g., three pages, ten pages, thirty pages, or any other number of pages). In some cases, the number of pages incremented or decremented as a result of the gesture can be based on a user setting. In such cases, the user may be able to adjust the number of pages that the eBook 708 content moves forward or backward based on performing the specific gesture. In some implementations, a user may be able to switch between flipping pages of the physical book 702 to advance the eBook 708 content and advancing the eBook without flipping pages of the physical book.

In some cases, the XR system can detect and respond to other gestures. For example, a user gesture can be used to change the displayed digital book content by a page, change the digital book content by a predetermined number of pages (e.g., three pages, ten pages, or any other number of pages), change to the next chapter, change to the nearest page containing one or more highlights, notes, or other annotation(s), any combination thereof, and/or other commands. The change in book content can be either forward or backward (e.g., depending on the direction of the user's gesture).

In another example, the pages of the physical book 702 and the eBook 708 can have a mismatch when there are insufficient pages in the physical book 702 to display all of the eBook 708 content as a user physically flips through pages of the eBook 708. In some cases, if the XR system detects that a user has reached the last page of the physical book 702, the XR system can provide a prompt to the user to flip back to an earlier page (e.g., the first page, the title page, the table of contents page, or any other page besides the last page) of the physical book 702. In some cases, once the XR system detects that the user has flipped the pages of the physical book 702 to an earlier page, the XR system can resume displaying the eBook content at the most recently viewed page or the next consecutive page. In some implementations, a user can bookmark a page of a particular eBook 708 by performing a gesture, interacting with a user interface, and/or using an input device (e.g., input device 108 shown in FIG. 1). In some cases, the next time the user selects the particular eBook and opens a physical book 702 to begin reading, the XR system can display the bookmarked page of the eBook, regardless of the page of the physical book that the user is viewing. In some implementations, the XR system can prompt the user to open the physical book 702 to a particular page, such as the page of the physical book 702 that matches the page number of the bookmarked page of the eBook 708, the page number of the physical book 702 that the user was viewing the previous time that the user was reading the particular eBook, or any other page of the physical book. In some cases, the XR system can save an image of the physical book 702 when the user finishes a reading session and based on detecting that the user has accessed the same physical book 702 at a later time, the XR system can remind the user to turn to the page number of the physical book 702 that the user left off at.

FIG. 7D illustrates examples of additional augmentations to the eBook 708 content that can be projected onto the pages of the physical book 702 by the XR system. The illustrated example of FIG. 7D depicts highlighting 714 and adding notes 716 to the eBook 708 content. In some examples, a user can select portions of text of the eBook 708 to highlight. In some cases, the user can highlight portions of the text by performing a gesture, making selections on a user interface, making an input with an input device (e.g., input device 108 shown in FIG. 1). In some cases, the highlighted portion of the eBook 708 content can be saved, shared, organized, searched, and/or downloaded. In some cases, the XR device may allow a user to make notes or annotations to the eBook 708 content. In some cases, the user can take notes on the book using fingers, a special pen, or a stick-like notes tool. In some cases, the XR system can detect writing motions by the user to recognize characters and the XR system can project what is written onto the eBook content as a note 716. In some implementations, the notes can be saved and edited by the user. In some cases, when the user reaches a page that includes a note 716, the user can select the note and the XR system can display the saved note either in the margin of the page, in a pop-out 718, or in another location displayed relative to the physical book 702.

In some cases, the text and picture content of an eBook 708 can be augmented with other additional content. For example, the XR system can display eBook 708 text while simultaneously rendering video, audio, music, or other digital content, collectively referred to herein as supplemental content. In one illustrative example, if a paragraph is describing Yosemite national park, a video describing Yosemite national park can be rendered beside the paragraph. In another example, if a paragraph is introducing a particular pianist, the XR system can play a sample of the pianist's music for the user. In some cases, the user can control whether the XR system renders and/or performs the supplemental content. In some cases, the XR system can also provide a dictionary function to enable a user to look up the meaning of words within the eBook. In some cases, the XR system can provide a search function for searching within the eBook content and/or searching for background information (e.g., from the Internet).

FIG. 7E illustrates an example of displaying non-adjacent pages of eBook 708 content on adjacent pages of the physical book 702. In some cases, the XR system may receive a request from the user to display non-adjacent pages of the physical book by a gesture, an input through a user interface, by an input device (e.g., input device 108 shown in FIG. 1) and/or through other techniques. In one illustrative example, if the user is currently reading the left page 710A of the eBook, the user can instruct the XR system to set the right page to be a different page that the user wants to read at the same time. In the illustrated example of FIG. 7E, page five of the eBook content is displayed on the left page 710A and page seventy-eight of the eBook content is displayed on the right page 710B. In some cases, instead of using a page of the physical book 702 to view a non-adjacent page, the user can select an additional display area to display additional pages of the eBook content. In one illustrative example, the user can instruct the XR system to display a particular page of the eBook 708 content on a wall simultaneous to displaying the page or pages of the eBook 708 content that the user is currently viewing on the physical book 702. In some cases, the user can instruct the XR system to switch between displaying the eBook 708 content on a particular physical book 702 and displaying the eBook content on another surface. In another illustrative example, the user can instruct the XR system to display a page with content the user wants to reference, for example, a term on the page that the user is currently reading may be defined somewhere in another part of the book, the user can instruct the XR system to display the definition of the term and the XR system can determine the appropriate page to display on the right page 710B or another surface. In some cases, the XR system can highlight or otherwise emphasize the portion of the page that includes the definition. In some implementations, the XR system can display only a portion of the appropriate page, such as the definition itself, on the right page 710 or another surface.

In some cases, the user can also view an additional page of the eBook 708 by flipping either the left page 710A or the right page 710B of the physical book 702. In some cases, the user can set the page of the eBook 708 for the XR system to project onto the flipped page of the physical book 702. In some cases, the XR system can detect the number of pages of the physical book 702 that the user flips to determine which page of the eBook 708 content to display. In one illustrative example, the XR system can compare the page numbers 706A and/or 706B of the physical book 702 with the page number showing on the flipped page of the physical book 702 to determine the page number of the eBook 708 content to display on the flipped page. In another illustrative example, the XR system can detect the thickness of the pages flipped by the user to estimate the number of pages flipped by the user and based on the thickness, determine the page number of the eBook 708 content to display on the flipped page.

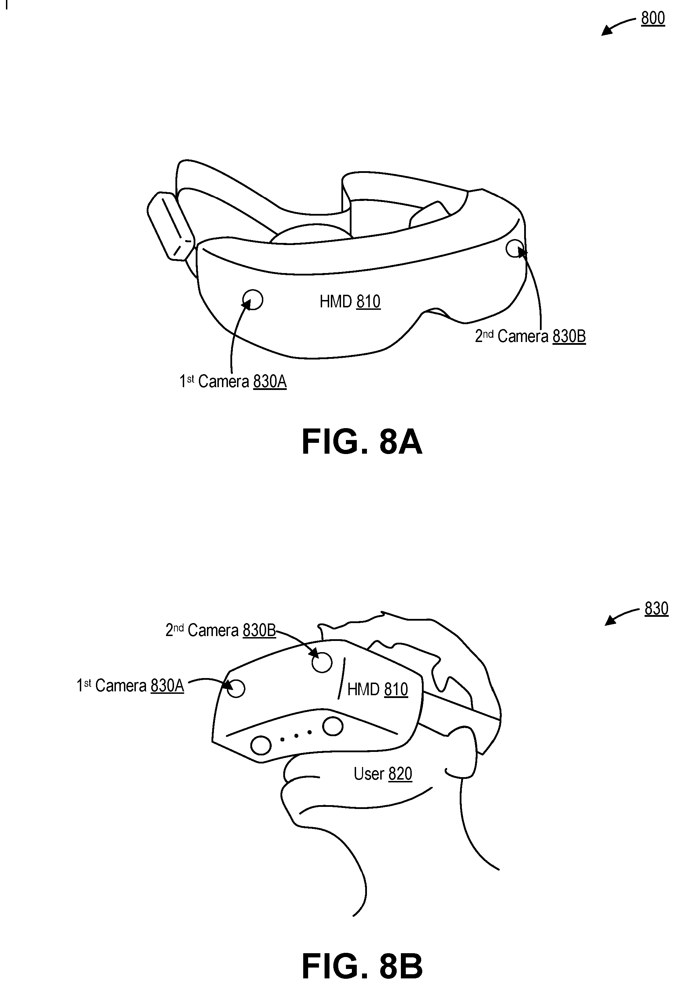

FIG. 8A is a perspective diagram 800 illustrating a head-mounted display (HMD) 810 that performs feature tracking and/or visual simultaneous localization and mapping (VSLAM), in accordance with some examples. The HMD 810 may be, for example, an augmented reality (AR) headset, a virtual reality (VR) headset, a mixed reality (MR) headset, an extended reality (XR) headset, or some combination thereof. The HMD 810 may include an XR system 100, a SLAM system 200, XR system 401, XR system 501, a variation thereof, or a combination thereof. The HMD 810 includes a first camera 830A and a second camera 830B along a front portion of the HMD 810. The first camera 830A and the second camera 830B may be two of the one or more cameras 210. In some examples, the HMD 810 may only have a single camera. In some examples, the HMD 810 may include one or more additional cameras in addition to the first camera 830A and the second camera 830B. In some examples, the HMD 810 may include one or more additional sensors in addition to the first camera 830A and the second camera 830B.

FIG. 8B is a perspective diagram 830 illustrating the head-mounted display (HMD) 810 of FIG. 8A being worn by a user 820, in accordance with some examples. The user 820 wears the HMD 810 on the user 820's head over the user 820's eyes. The HMD 810 can capture images with the first camera 830A and the second camera 830B. In some examples, the HMD 810 displays one or more display images toward the user 820's eyes that are based on the images captured by the first camera 830A and the second camera 830B. The display images may provide a stereoscopic view of the environment, in some cases with information overlaid and/or with other modifications. For example, the HMD 810 can display a first display image to the user 820's right eye, the first display image based on an image captured by the first camera 830A. The HMD 810 can display a second display image to the user 820's left eye, the second display image based on an image captured by the second camera 830B. For instance, the HMD 810 may provide overlaid information in the display images overlaid over the images captured by the first camera 830A and the second camera 830B.

The HMD 810 includes no wheels propellers, or other conveyance of its own. Instead, the HMD 810 relies on the movements of the user 820 to move the HMD 810 about the environment. In some cases, the HMD 810 can perform path planning using a path planning engine, and can indicate directions to follow a suggested path to the user 820 to direct the user along the suggested path planned using the path planning engine. In some cases, for instance where the HMD 810 is a VR headset, the environment may be entirely or partially virtual. If the environment is at least partially virtual, then movement through the virtual environment may be virtual as well. For instance, movement through the virtual environment can be controlled by an input device (e.g., input device 108 shown in FIG. 1). The movement actuator may include any such input device. Movement through the virtual environment may not require wheels, propellers, legs, or any other form of conveyance. If the environment is a virtual environment, then the HMD 810 can still perform path planning using the path planning engine and/or movement actuation. If the environment is a virtual environment, the HMD 810 can perform movement actuation using the movement actuator by performing a virtual movement within the virtual environment. Even if an environment is virtual, SLAM techniques may still be valuable, as the virtual environment can be unmapped and/or may have been generated by a device other than the HMD 810, such as a remote server or console associated with a video game or video game platform.

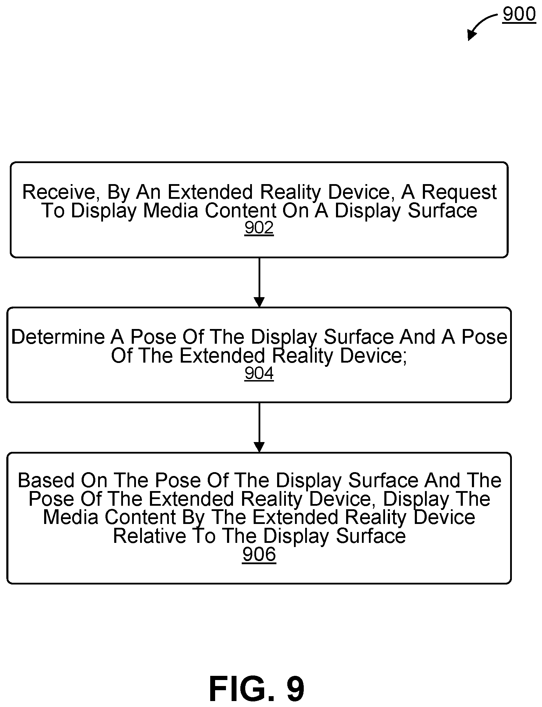

FIG. 9 is a flow diagram illustrating an example of a process 900 of displaying media content. At block 902, the process 900 includes receiving, by an extended reality device, a request to display media content on a display surface. In one illustrative example, the display surface includes at least a portion of a page of a book.

At block 904, the process 900 includes determining a pose of the display surface and a pose of the extended reality device. In some cases, determining the pose of the display surface comprises determining a deformation model of at least one feature of the display surface. In some implementations, determining the pose of the display surface comprises determining a deformation model of at least one feature of the display surface. For example, the at least one feature can include corners of a page, edges of a page, special markings, vertical lines of text printed on the pages, horizontal lines of text printed on the page, shadows, or any combination thereof. In some implementations, determining the deformation model of the feature of the display surface includes determining a plurality of pixel locations of the feature of the display surface and determining a curve fitting to the plurality of pixel locations of the feature of the display surface. In some cases, determining the curve fitting comprises minimizing a mean squared error between the curve fitting and the plurality of pixel locations. In some examples, the curve fitting is a polynomial curve fitting, a Gaussian curve fitting, a trigonometric (e.g., sine and cosine) curve fitting, a sigmoid curve fitting, or any combination thereof.

At block 906, the process 900 includes, based on the pose of the display surface and the pose of the extended reality device, displaying the media content by the extended reality device relative to the display surface. In some cases, displaying the media content relative to the display surface includes displaying the media content relative to the deformation model of the display surface. In some cases, displaying the media content includes determining a relative pose change between the extended reality device and the display surface and displaying, by the extended reality device, the media content with an updated orientation relative to the display surface based on the determined relative pose change. In one illustrative example, the relative pose change includes a pose change of the extended reality device in at least one of six degrees of freedom. In some cases, the relative pose change is determined at least in part based on an input obtained from one or more motion sensors. In one illustrative example, the one or more motion sensors includes an IMU. In some cases, determining a portion of the media content to display on the display surface is based on one or more features of the display surface. For example, the one or more features can include a page number printed on a page of a book. In some examples, determining a location and an orientation for displaying the media content relative to the display surface is based on a location of an edge of a page of the display surface.

In some cases, process 900 includes displaying a first page of a digital book on the display surface. In some cases, process 900 includes detecting a turn of a page of the digital book. In some examples, based on detecting the turn of the page, displaying a second page of the digital book, different from the first page.

In some cases, process 900 includes obtaining an input instructing the extended reality device to change display of the media content from the display surface to another display surface (e.g., a wall, another book, the top of a desk, a curtain, and projector screen). In some cases, based on the input, process 900 can determine a pose of the another display surface and another pose of the extended reality device. In some examples, based on the pose of the another display surface and the another pose of the extended reality device, the process 900 can display the media content by the extended reality device relative to the another display surface.

In some implementations, process 900 includes detecting, by the extended reality device a gesture input (e.g., turning a page of the physical book, performing a motion imitating turning a page of a book, tapping the page of the physical book, or any other gesture) instructing the extended reality device to update a displayed portion of the media content. In some cases, based on the input, the process 900 can update the displayed portion of the media content.

In some cases, process 900 includes receiving information about a boundary of the display surface. In one illustrative example, the information about the boundary of the display surface is based on a gesture detected by the extended reality device.

In some cases, at least a subset of the techniques illustrated by the process 900 may be performed remotely by one or more network servers of a cloud service. In some examples, the processes described herein (e.g., process 900 and/or other process(es) described herein) may be performed by a computing device or apparatus. The process 900 can be performed by the XR system 100 shown in FIG. 1, the SLAM system 200 shown in FIG. 2, the XR system 301 shown in FIG. 3, the XR system 401 shown in FIG. 4A through FIG. 4D, the XR system 501 shown in FIG. 5A and FIG. 5B, the head-mounted display (HMD) 810 shown in FIG. 8A and FIG. 8B, a variation thereof, or a combination thereof. The process 900 can also be performed by a computing device with the architecture of the computing system 1000 shown in FIG. 10. The computing device can include any suitable device, such as a mobile device (e.g., a mobile phone), a desktop computing device, a tablet computing device, a wearable device (e.g., a VR headset, an AR headset, AR glasses, a network-connected watch or smartwatch, or other wearable device), a server computer, an autonomous vehicle or computing device of an autonomous vehicle, a robotic device, a television, and/or any other computing device with the resource capabilities to perform the processes described herein, including the process 900. In some cases, the computing device or apparatus may include various components, such as one or more input devices, one or more output devices, one or more processors, one or more microprocessors, one or more microcomputers, one or more cameras, one or more sensors, and/or other component(s) that are configured to carry out the steps of processes described herein. In some examples, the computing device may include a display, a network interface configured to communicate and/or receive the data, any combination thereof, and/or other component(s). The network interface may be configured to communicate and/or receive Internet Protocol (IP) based data or other type of data.

The components of the computing device can be implemented in circuitry. For example, the components can include and/or can be implemented using electronic circuits or other electronic hardware, which can include one or more programmable electronic circuits (e.g., microprocessors, graphics processing units (GPUs), digital signal processors (DSPs), central processing units (CPUs), and/or other suitable electronic circuits), and/or can include and/or be implemented using computer software, firmware, or any combination thereof, to perform the various operations described herein.

The processes illustrated by block diagrams in FIG. 1 (of XR system 100), FIG. 2 (of SLAM system 200), and FIG. 10 (of system 1000) and the flow diagram illustrating process 900 are illustrative of, or organized as, logical flow diagrams, the operation of which represents a sequence of operations that can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which the operations are described is not intended to be construed as a limitation, and any number of the described operations can be combined in any order and/or in parallel to implement the processes.

Additionally, the processes illustrated by block diagrams in FIG. 1 (of XR system 100), FIG. 2 (of SLAM system 200), and FIG. 10 (of system 1000) and the flow diagram illustrating process 900 and/or other processes described herein may be performed under the control of one or more computer systems configured with executable instructions and may be implemented as code (e.g., executable instructions, one or more computer programs, or one or more applications) executing collectively on one or more processors, by hardware, or combinations thereof. As noted above, the code may be stored on a computer-readable or machine-readable storage medium, for example, in the form of a computer program comprising a plurality of instructions executable by one or more processors. The computer-readable or machine-readable storage medium may be non-transitory.

FIG. 10 is a diagram illustrating an example of a system for implementing certain aspects of the present technology. In particular, FIG. 10 illustrates an example of computing system 1000, which can be for example the XR system 100, the SLAM system 200, a remote computing system, or any component thereof in which the components of the system are in communication with each other using connection 1005. Connection 1005 can be a physical connection using a bus, or a direct connection into processor 1010, such as in a chipset architecture. Connection 1005 can also be a virtual connection, networked connection, or logical connection.

In some embodiments, computing system 1000 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example system 1000 includes at least one processing unit (CPU or processor) 1010 and connection 1005 that couples various system components including system memory 1015, such as read-only memory (ROM) 1020 and random access memory (RAM) 1025 to processor 1010. Computing system 1000 can include a cache 1012 of high-speed memory connected directly with, in close proximity to, or integrated as part of processor 1010.

Processor 1010 can include any general purpose processor and a hardware service or software service, such as services 1032, 1034, and 1036 stored in storage device 1030, configured to control processor 1010 as well as a special-purpose processor where software instructions are incorporated into the actual processor design. Processor 1010 may essentially be a completely self-contained computing system, containing multiple cores or processors, a bus, memory controller, cache, etc. A multi-core processor may be symmetric or asymmetric.

To enable user interaction, computing system 1000 includes an input device 1045, which can represent any number of input mechanisms, such as a microphone for speech, a touch-sensitive screen for gesture or graphical input, keyboard, mouse, motion input, speech, etc. Computing system 1000 can also include output device 1035, which can be one or more of a number of output mechanisms. In some instances, multimodal systems can enable a user to provide multiple types of input/output to communicate with computing system 1000. Computing system 1000 can include communications interface 1040, which can generally govern and manage the user input and system output. The communication interface may perform or facilitate receipt and/or transmission wired or wireless communications using wired and/or wireless transceivers, including those making use of an audio jack/plug, a microphone jack/plug, a universal serial bus (USB) port/plug, an Apple® Lightning® port/plug, an Ethernet port/plug, a fiber optic port/plug, a proprietary wired port/plug, a BLUETOOTH® wireless signal transfer, a BLUETOOTH® low energy (BLE) wireless signal transfer, an IBEACON® wireless signal transfer, a radio-frequency identification (RFID) wireless signal transfer, near-field communications (NFC) wireless signal transfer, dedicated short range communication (DSRC) wireless signal transfer, 802.11 Wi-Fi wireless signal transfer, wireless local area network (WLAN) signal transfer, Visible Light Communication (VLC), Worldwide Interoperability for Microwave Access (WiMAX), Infrared (IR) communication wireless signal transfer, Public Switched Telephone Network (PSTN) signal transfer, Integrated Services Digital Network (ISDN) signal transfer, 3G/4G/5G/LTE cellular data network wireless signal transfer, ad-hoc network signal transfer, radio wave signal transfer, microwave signal transfer, infrared signal transfer, visible light signal transfer, ultraviolet light signal transfer, wireless signal transfer along the electromagnetic spectrum, or some combination thereof. The communications interface 1040 may also include one or more Global Navigation Satellite System (GNSS) receivers or transceivers that are used to determine a location of the computing system 1000 based on receipt of one or more signals from one or more satellites associated with one or more GNSS systems. GNSS systems include, but are not limited to, the US-based Global Positioning System (GPS), the Russia-based Global Navigation Satellite System (GLONASS), the China-based BeiDou Navigation Satellite System (BDS), and the Europe-based Galileo GNSS. There is no restriction on operating on any particular hardware arrangement, and therefore the basic features here may easily be substituted for improved hardware or firmware arrangements as they are developed.

Storage device 1030 can be a non-volatile and/or non-transitory and/or computer-readable memory device and can be a hard disk or other types of computer readable media which can store data that are accessible by a computer, such as magnetic cassettes, flash memory cards, solid state memory devices, digital versatile disks, cartridges, a floppy disk, a flexible disk, a hard disk, magnetic tape, a magnetic strip/stripe, any other magnetic storage medium, flash memory, memristor memory, any other solid-state memory, a compact disc read only memory (CD-ROM) optical disc, a rewritable compact disc (CD) optical disc, digital video disk (DVD) optical disc, a Blu-ray disc (BDD) optical disc, a holographic optical disk, another optical medium, a secure digital (SD) card, a micro secure digital (microSD) card, a Memory Stick® card, a smartcard chip, a EMV chip, a subscriber identity module (SIM) card, a mini/micro/nano/pico SIM card, another integrated circuit (IC) chip/card, random access memory (RAM), static RAM (SRAM), dynamic RAM (DRAM), read-only memory (ROM), programmable read-only memory (PROM), erasable programmable read-only memory (EPROM), electrically erasable programmable read-only memory (EEPROM), flash EPROM (FLASHEPROM), cache memory (L1/L2/L3/L4/L5/L#), resistive random-access memory (RRAM/ReRAM), phase change memory (PCM), spin transfer torque RAM (STT-RAM), another memory chip or cartridge, and/or a combination thereof.

The storage device 1030 can include software services, servers, services, etc., that when the code that defines such software is executed by the processor 1010, it causes the system to perform a function. In some embodiments, a hardware service that performs a particular function can include the software component stored in a computer-readable medium in connection with the necessary hardware components, such as processor 1010, connection 1005, output device 1035, etc., to carry out the function.

As used herein, the term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted using any suitable means including memory sharing, message passing, token passing, network transmission, or the like.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Specific details are provided in the description above to provide a thorough understanding of the embodiments and examples provided herein. However, it will be understood by one of ordinary skill in the art that the embodiments may be practiced without these specific details. For clarity of explanation, in some instances the present technology may be presented as including individual functional blocks including functional blocks comprising devices, device components, steps or routines in a method embodied in software, or combinations of hardware and software. Additional components may be used other than those shown in the figures and/or described herein. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Individual embodiments may be described above as a process or method which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

Processes and methods according to the above-described examples can be implemented using computer-executable instructions that are stored or otherwise available from computer-readable media. Such instructions can include, for example, instructions and data which cause or otherwise configure a general purpose computer, special purpose computer, or a processing device to perform a certain function or group of functions. Portions of computer resources used can be accessible over a network. The computer executable instructions may be, for example, binaries, intermediate format instructions such as assembly language, firmware, source code, etc. Examples of computer-readable media that may be used to store instructions, information used, and/or information created during methods according to described examples include magnetic or optical disks, flash memory, USB devices provided with non-volatile memory, networked storage devices, and so on.

Devices implementing processes and methods according to these disclosures can include hardware, software, firmware, middleware, microcode, hardware description languages, or any combination thereof, and can take any of a variety of form factors. When implemented in software, firmware, middleware, or microcode, the program code or code segments to perform the necessary tasks (e.g., a computer-program product) may be stored in a computer-readable or machine-readable medium. A processor(s) may perform the necessary tasks. Typical examples of form factors include laptops, smart phones, mobile phones, tablet devices or other small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are example means for providing the functions described in the disclosure.

In the foregoing description, aspects of the application are described with reference to specific embodiments thereof, but those skilled in the art will recognize that the application is not limited thereto. Thus, while illustrative embodiments of the application have been described in detail herein, it is to be understood that the inventive concepts may be otherwise variously embodied and employed, and that the appended claims are intended to be construed to include such variations as they fall in the scope of the appended claims. Various features and aspects of the above-described application may be used individually or jointly. Further, embodiments can be utilized in any number of environments and applications beyond those described herein without departing from the scope of the specification. The specification and drawings are, accordingly, to be regarded as illustrative rather than restrictive. For the purposes of illustration, methods were described in a particular order. It should be appreciated that in alternate embodiments, the methods may be performed in a different order than that described.

One of ordinary skill will appreciate that the less than ("<") and greater than (">") symbols or terminology used herein can be replaced with less than or equal to ("≤") and greater than or equal to ("≥") symbols, respectively, without departing from the scope of this description.

Where components are described as being "configured to" perform certain operations, such configuration can be accomplished, for example, by designing electronic circuits or other hardware to perform the operation, by programming programmable electronic circuits (e.g., microprocessors, or other suitable electronic circuits) to perform the operation, or any combination thereof.

The phrase "coupled to" refers to any component that is physically connected to another component either directly or indirectly, and/or any component that is in communication with another component (e.g., connected to the other component over a wired or wireless connection, and/or other suitable communication interface) either directly or indirectly.

Claim language or other language reciting "at least one of" a set and/or "one or more" of a set indicates that one member of the set or multiple members of the set (in any combination) satisfy the claim. For example, claim language reciting "at least one of A and B" means A, B, or A and B. In another example, claim language reciting "at least one of A, B, and C" means A, B, C, or A and B, or A and C, or B and C, or A and B and C. The language "at least one of" a set and/or "one or more" of a set does not limit the set to the items listed in the set. For example, claim language reciting "at least one of A and B" can mean A, B, or A and B, and can additionally include items not listed in the set of A and B.

The various illustrative logical blocks, modules, circuits, and algorithm steps described in connection with the embodiments disclosed herein may be implemented as electronic hardware, computer software, firmware, or combinations thereof. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present application.

The techniques described herein may also be implemented in electronic hardware, computer software, firmware, or any combination thereof. Such techniques may be implemented in any of a variety of devices such as general purposes computers, wireless communication device handsets, or integrated circuit devices having multiple uses including application in wireless communication device handsets and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods described above. The computer-readable data storage medium may form part of a computer program product, which may include packaging materials. The computer-readable medium may comprise memory or data storage media, such as random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor, which may include one or more processors, such as one or more digital signal processors (DSPs), general purpose microprocessors, an application specific integrated circuits (ASICs), field programmable logic arrays (FPGAs), or other equivalent integrated or discrete logic circuitry. Such a processor may be configured to perform any of the techniques described in this disclosure. A general purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein. In addition, in some aspects, the functionality described herein may be provided within dedicated software modules or hardware modules configured for encoding and decoding, or incorporated in a combined video encoder-decoder (CODEC).

## Claims

1. A method of displaying media content (506) comprising:

    receiving, by an extended reality device (100), a request to display media content (506) on a display surface (404); determining a pose of the display surface (404) and a pose of the extended reality device (100), wherein determining the pose of the display surface (404) comprises determining a deformation model of at least one feature (608) of the display surface (404), wherein determining the deformation model comprises determining a plurality of pixel locations (604) of the feature (608) of the display surface (404) and determining a curve fitting to the plurality of pixel locations (604) of the feature (608) of the display surface (404), and wherein the at least one feature (608) of the display surface (404) comprises an edge of a page of a book; and
    based on the pose of the display surface (404) and the pose of the extended reality device (100), displaying, on a display (109) of the extended reality device (100) that allows a user to see a real-world environment and allows media content (506) to be displayed thereon, the media content (506) by the extended reality device (100) positioned relative to the display surface (404).

2. The method of claim 1, wherein the display surface comprises at least a portion of a page of a book.

3. The method of claim 1, further comprising determining a deformation model for at least a portion of the display surface based on the deformation model of the at least one feature of the display surface.

4. The method of claim 3, wherein displaying the media content relative to the display surface comprises displaying the media content relative to the deformation model of the display surface.

5. The method of claim 1, wherein the at least one feature of the display surface comprises a plurality of text characters printed on a page of a book.

6. The method of claim 1, wherein determining the curve fitting comprises minimizing a mean squared error between the curve fitting and the plurality of pixel locations.

7. The method of claim 1 wherein the curve fitting comprises a polynomial curve fitting.

8. The method of claim 1, further comprising:

    determining a relative pose change between the extended reality device and the display surface; and displaying, by the extended reality device, the media content with an updated orientation relative to the display surface based on the determined relative pose change.

9. The method of claim 8, wherein the relative pose change comprises a pose change of the extended reality device in at least one of six degrees of freedom and optionally wherein the relative pose change is determined at least in part based on an input obtained from an inertial measurement unit.

10. The method of claim 9, wherein the relative pose change is determined at least in part based on an input obtained from an inertial measurement unit.

11. The method of claim 1, further comprising:
    determining a location and an orientation for displaying the media content relative to the display surface based on a location of an edge of a page of the display surface.

12. The method of claim 1, further comprising:
    determining a portion of the media content to display on the display surface based on one or more features of the display surface.

13. An apparatus for displaying media content (506), comprising:

    a memory (1015);
    a display (109) configured to allow a user to see a real-world environment and allows media content (506) to be displayed thereon; and
    one or more processors (1010) coupled to the memory (1015) and configured to:

    receive, by an extended reality device (100), a request to display media content (506) on a display surface (404);
    determine, by the extended reality device (100), a pose of the display surface (404) and a pose of the extended reality device (100), wherein, to determine the pose of the display surface (404), the one or more processors (1010) are configured to determine a deformation model of at least one feature (608) of the display surface (404), and wherein determining the deformation model comprises determining a plurality of pixel locations (604) of the feature (608) of the display surface (404) and determining a curve fitting to the plurality of pixel locations (604) of the feature (608) of the display surface (404), and wherein the at least one feature (608) of the display surface (404) comprises an edge of a page of a book; and
    based on the pose of the display surface (404) and the pose of the extended reality device (100), display, on the display (109), the media content (506) by the extended reality device (100) positioned relative to the display surface (404).

14. A computer program comprising instructions which, when the program is executed by an extended reality device (100), cause the extended reality device (100) to:

    receive a request to display media content (506) on a display surface (404);
    determine a pose of the display surface (404) and a pose of the extended reality device (100), wherein determining the pose of the display surface (404) comprises determining a deformation model of at least one feature (608) of the display surface (404), wherein determining the deformation model comprises determining a plurality of pixel locations (604) of the feature (608) of the display surface (404) and determining a curve fitting to the plurality of pixel locations (604) of the feature (608) of the display surface (404), and wherein the at least one feature (608) of the display surface (404) comprises an edge of a page of a book; and
    based on the pose of the display surface (404) and the pose of the extended reality device (100), display, on a display (109) of the extended reality device (100) that allows a user to see a real-word environment and allows media content (506) to be displayed thereon, the media content (506) positioned relative to the display surface (404).

**Patentansprüche**

1. Verfahren zum Anzeigen von Medieninhalt (506), das Folgendes beinhaltet:

   Empfangen, durch ein Extended-Reality-Gerät (100), einer Anforderung zum Anzeigen von Medieninhalt (506) auf einer Anzeigefläche (404);
   Bestimmen einer Pose der Anzeigefläche (404) und einer Pose des Extended-Reality-Geräts (100), wobei das Bestimmen der Pose der Anzeigefläche (404) das Bestimmen eines Verformungsmodells von mindestens einem Merkmal (608) der Anzeigefläche (404) beinhaltet, wobei das Bestimmen des Verformungsmodells das Bestimmen mehrerer Pixelpositionen (604) des Merkmals (608) der Anzeigefläche (404) und das Bestimmen einer Kurvenanpassung an die mehreren Pixelpositionen (604) des Merkmals (608) der Anzeigefläche (404) beinhaltet, und wobei das mindestens eine Merkmal (608) der Anzeigefläche (404) eine Kante einer Seite eines Buches umfasst; und
   Anzeigen, auf der Basis der Pose der Anzeigefläche (404) und der Pose des Extended-Reality-Geräts (100), des Medieninhalts (506) durch das relativ zur Anzeigefläche (404) positionierte Extended-Reality-Gerät (100), auf einem Display (109) des Extended-Reality-Geräts (100), das es einem Benutzer ermöglicht, eine reale Umgebung zu sehen und Medieninhalt (506) darauf anzuzeigen.

2. Verfahren nach Anspruch 1, wobei die Anzeigefläche mindestens einen Teil einer Seite eines Buches umfasst.

3. Verfahren nach Anspruch 1, das ferner das Bestimmen eines Verformungsmodells für mindestens einen Teil der Anzeigefläche auf der Basis des Verformungsmodells des mindestens einen Merkmals der Anzeigefläche umfasst.

4. Verfahren nach Anspruch 3, wobei das Anzeigen des Medieninhalts relativ zur Anzeigefläche das Anzeigen des Medieninhalts relativ zum Verformungsmodell der Anzeigefläche beinhaltet.

5. Verfahren nach Anspruch 1, wobei das mindestens eine Merkmal der Anzeigefläche mehrere auf einer Seite eines Buches gedruckte Textzeichen umfasst.

6. Verfahren nach Anspruch 1, wobei das Bestimmen der Kurvenanpassung das Minimieren eines mittleren quadratischen Fehlers zwischen der Kurvenanpassung und den mehreren Pixelpositionen beinhaltet.

7. Verfahren nach Anspruch 1, wobei die Kurvenanpassung eine polynomiale Kurvenanpassung umfasst.

8. Verfahren nach Anspruch 1, das ferner Folgendes beinhaltet:

   Bestimmen einer relativen Posenänderung zwischen dem Extended-Reality-Gerät und der Anzeigefläche; und
   Anzeigen, durch das Extended-Reality-Gerät, des Medieninhalts mit einer aktualisierten Orientierung relativ zur Anzeigefläche auf der Basis der bestimmten relativen Posenänderung.

9. Verfahren nach Anspruch 8, wobei die relative Posenänderung eine Posenänderung des Extended-Reality-Geräts in mindestens einem von sechs Freiheitsgraden umfasst, und wobei die relative Posenänderung optional zumindest teilweise auf der Basis einer von einer Trägheitsmesseinheit erhaltenen Eingabe bestimmt wird.

10. Verfahren nach Anspruch 9, wobei die relative Posenänderung zumindest teilweise auf der Basis einer von einer Trägheitsmesseinheit erhaltenen Eingabe bestimmt wird.

11. Verfahren nach Anspruch 1, das ferner Folgendes beinhaltet:
    Bestimmen einer Position und einer Orientierung zum Anzeigen des Medieninhalts relativ zur Anzeigefläche auf der Basis einer Position einer Kante einer Seite der Anzeigefläche.

12. Verfahren nach Anspruch 1, das ferner Folgendes beinhaltet:
    Bestimmen eines Teils des Medieninhalts, der auf der Anzeigefläche angezeigt werden soll, auf der Basis eines oder mehrerer Merkmale der Anzeigefläche.

13. Vorrichtung zum Anzeigen von Medieninhalt (506), die Folgendes umfasst:

    einen Speicher (1015);

ein Display (109), so konfiguriert, dass ein Benutzer eine reale Umgebung sehen und Medieninhalt (506) darauf angezeigt werden kann; und

einen oder mehrere Prozessoren (1010), die mit dem Speicher (1015) gekoppelt und konfiguriert sind zum:

Empfangen, durch ein Extended-Reality-Gerät (100), einer Anforderung zum Anzeigen von Medieninhalt (506) auf einer Anzeigefläche (404);

Bestimmen, durch das Extended-Reality-Gerät (100), einer Pose der Anzeigefläche (404) und einer Pose des Extended-Reality-Geräts (100), wobei zum Bestimmen der Pose der Anzeigefläche (404) die ein oder mehreren Prozessoren (1010) zum Bestimmen eines Verformungsmodells von mindestens einem Merkmal (608) der Anzeigefläche (404) konfiguriert sind, und wobei das Bestimmen des Verformungsmodells das Bestimmen mehrerer Pixelpositionen (604) des Merkmals (608) der Anzeigefläche (404) und das Bestimmen einer Kurvenanpassung an die mehreren Pixelpositionen (604) des Merkmals (608) der Anzeigefläche (404) beinhaltet, und wobei das mindestens eine Merkmal (608) der Anzeigefläche (404) eine Kante einer Seite eines Buches umfasst; und

Anzeigen, auf dem Display (109), auf der Basis der Pose der Anzeigefläche (404) und der Pose des Extended-Reality-Geräts (100), des Medieninhalts (506) durch das relativ zur Anzeigefläche (404) positionierte Extended-Reality-Gerät (100).

**14.** Computerprogramm, das Befehle umfasst, die bei Ausführung des Programms durch ein Extended-Reality-Gerät (100) das Extended-Reality-Gerät (100) veranlassen zum:

Empfangen einer Anforderung zum Anzeigen von Medieninhalt (506) auf einer Anzeigefläche (404);

Bestimmen einer Pose der Anzeigefläche (404) und einer Pose des Extended-Reality-Geräts (100), wobei das Bestimmen der Pose der Anzeigefläche (404) das Bestimmen eines Verformungsmodells von mindestens einem Merkmal (608) der Anzeigefläche (404) beinhaltet, wobei das Bestimmen des Verformungsmodells das Bestimmen mehrerer Pixelpositionen (604) des Merkmals (608) der Anzeigefläche (404) und das Bestimmen einer Kurvenanpassung an die mehreren Pixelpositionen (604) des Merkmals (608) der Anzeigefläche (404) beinhaltet, und wobei das mindestens eine Merkmal (608) der Anzeigefläche (404) eine Kante einer Seite eines Buches umfasst; und

Anzeigen, auf der Basis der Pose der Anzeigefläche (404) und der Pose des Extended-Reality-Geräts (100), des Medieninhalts (506) durch das relativ zur Anzeigefläche (404) positionierte Extended-Reality-Gerät (100), auf einem Display (109) des Extended-Reality-Geräts (100), das es einem Benutzer ermöglicht, eine reale Umgebung zu sehen und Medieninhalt (506) darauf anzuzeigen.

**Revendications**

**1.** Procédé d'affichage de contenu multimédia (506) comprenant :

la réception, par un dispositif de réalité étendue (100), d'une demande d'affichage de contenu multimédia (506) sur une surface d'affichage (404) ;

la détermination d'une pose de la surface d'affichage (404) et d'une pose du dispositif de réalité étendue (100), dans lequel la détermination de la pose de la surface d'affichage (404) comprend la détermination d'un modèle de déformation d'au moins une caractéristique (608) de la surface d'affichage (404), dans lequel la détermination du modèle de déformation comprend la détermination d'une pluralité d'emplacements de pixels (604) de la caractéristique (608) de la surface d'affichage (404) et la détermination d'un ajustement de courbe à la pluralité d'emplacements de pixels (604) de la caractéristique (608) de la surface d'affichage (404), et dans lequel l'au moins une caractéristique (608) de la surface d'affichage (404) comprend un bord d'une page d'un livre ; et

sur la base de la pose de la surface d'affichage (404) et de la pose du dispositif de réalité étendue (100), l'affichage sur un afficheur (109) du dispositif de réalité étendue (100) qui permet à un utilisateur de voir un environnement réel et d'afficher un contenu multimédia (506) sur celui-ci, du contenu multimédia (506) par le dispositif de réalité étendue (100) positionné par rapport à la surface d'affichage (404).

**2.** Procédé selon la revendication 1, dans lequel la surface d'affichage comprend au moins une partie d'une page d'un livre.

**3.** Procédé selon la revendication 1, comprenant en outre la détermination d'un modèle de déformation pour au moins une partie de la surface d'affichage sur la base du modèle de déformation de l'au moins une caractéristique de la surface d'affichage.

4. Procédé selon la revendication 3, dans lequel l'affichage du contenu multimédia par rapport à la surface d'affichage comprend l'affichage du contenu multimédia par rapport au modèle de déformation de la surface d'affichage.

5. Procédé selon la revendication 1, dans lequel l'au moins une caractéristique de la surface d'affichage comprend une pluralité de caractères de texte imprimés sur une page d'un livre.

6. Procédé selon la revendication 1, dans lequel la détermination de l'ajustement de courbe comprend la minimisation d'une erreur quadratique moyenne entre l'ajustement de courbe et la pluralité d'emplacements de pixels.

7. Procédé selon la revendication 1, dans lequel l'ajustement de courbe comprend un ajustement de courbe polynomiale.

8. Procédé selon la revendication 1, comprenant en outre :

la détermination d'un changement de pose relative entre le dispositif de réalité étendue et la surface d'affichage ; et

l'affichage, par le dispositif de réalité étendue, du contenu multimédia avec une orientation mise à jour par rapport à la surface d'affichage sur la base du changement de pose relative déterminé.

9. Procédé selon la revendication 8, dans lequel le changement de pose relative comprend un changement de pose du dispositif de réalité étendue dans au moins un de six degrés de liberté et, éventuellement, dans lequel le changement de pose relative est déterminé au moins en partie sur la base d'une entrée obtenue à partir d'une unité de mesure inertielle.

10. Procédé selon la revendication 9, dans lequel le changement de pose relative est déterminé au moins en partie sur la base d'une entrée obtenue à partir d'une unité de mesure inertielle.

11. Procédé selon la revendication 1, comprenant en outre :
la détermination d'un emplacement et d'une orientation pour afficher le contenu multimédia par rapport à la surface d'affichage sur la base d'un emplacement d'un bord d'une page de la surface d'affichage.

12. Procédé selon la revendication 1, comprenant en outre :
la détermination d'une partie du contenu multimédia à afficher sur la surface d'affichage sur la base d'une ou plusieurs caractéristiques de la surface d'affichage.

13. Appareil d'affichage de contenu multimédia (506), comprenant :

une mémoire (1015) ;
un afficheur (109) configuré pour permettre à un utilisateur de voir un environnement réel et permettre l'affichage d'un contenu multimédia (506) sur celui-ci ; et
un ou plusieurs processeurs (1010) couplés à la mémoire (1015) et configurés pour :

recevoir, par un dispositif de réalité étendue (100), une demande d'affichage du contenu multimédia (506) sur une surface d'affichage (404) ;
déterminer, au moyen du dispositif de réalité étendue (100), une pose de la surface d'affichage (404) et une pose du dispositif de réalité étendue (100), dans lequel, pour déterminer la pose de la surface d'affichage (404), les un ou plusieurs processeurs (1010) sont configurés pour déterminer un modèle de déformation d'au moins une caractéristique (608) de la surface d'affichage (404), et dans lequel la détermination du modèle de déformation comprend la détermination d'une pluralité de positions de pixels (604) de la caractéristique (608) de la surface d'affichage (404) et la détermination d'un ajustement de courbe à la pluralité d'emplacements de pixels (604) de la caractéristique (608) de la surface d'affichage (404), et dans lequel l'au moins une caractéristique (608) de la surface d'affichage (404) comprend un bord d'une page d'un livre ; et
sur la base de la pose de la surface d'affichage (404) et de la pose du dispositif de réalité étendue (100), afficher, sur l'afficheur (109), le contenu multimédia (506) par le dispositif de réalité étendue (100) positionné par rapport à la surface d'affichage (404).

**14.** Programme informatique comprenant des instructions qui, une fois le programme exécuté par un dispositif de réalité étendue (100), amènent le dispositif de réalité étendue (100) à :

recevoir une demande d'affichage du contenu multimédia (506) sur une surface d'affichage (404) ;

déterminer une pose de la surface d'affichage (404) et une pose du dispositif de réalité étendue (100), dans lequel, pour déterminer la pose de la surface d'affichage (404), les un ou plusieurs processeurs (1010) sont configurés pour déterminer un modèle de déformation d'au moins une caractéristique (608) de la surface d'affichage (404), et dans lequel la détermination du modèle de déformation comprend la détermination d'une pluralité de positions de pixels (604) de la caractéristique (608) de la surface d'affichage (404) et la détermination d'un ajustement de courbe à la pluralité d'emplacements de pixels (604) de la caractéristique (608) de la surface d'affichage (404), et dans lequel l'au moins une caractéristique (608) de la surface d'affichage (404) comprend un bord d'une page d'un livre ; et

sur la base de la pose de la surface d'affichage (404) et de la pose du dispositif de réalité étendue (100), afficher, sur un afficheur (109) du dispositif de réalité étendue (100) qui permet à un utilisateur de voir un environnement du monde réel et d'afficher un contenu multimédia (506) sur celui-ci, le contenu multimédia (506) positionné par rapport à la surface d'affichage (404).

Extended Reality (XR) System 100

**FIG. 1**

EP 4 402 556 B1

EP 4 402 556 B1

SLAM System 2<u>00</u>

Sensor(s) <u>205</u>

Camera(s) <u>210</u>

Sensor Data <u>265</u>
(e.g., image, IMU)

3D Feature
Positions
<u>272</u> &
Keyframes
<u>270</u>

Visual Odometry (VIO) Tracker <u>215</u>

Feature Tracking
Engine <u>220</u>

Sensor Integration
Engine <u>225</u>

Map Slices
<u>275</u>

Mapping Engine <u>230</u>

Map Densification
Engine <u>235</u>

Keyframe
Remover <u>240</u>

Bundle Adjuster
<u>245</u>

Loop closure
detector <u>250</u>

Pose <u>285</u>

Relocalization Engine <u>255</u>

Extraction + Matching Engine <u>260</u>

Map Info <u>280</u>

**FIG. 2**

FIG. 3

FIG. 4A

FIG. 4B

FIG. 4C

FIG. 4D

**FIG. 5A**

**FIG. 5B**

FIG. 6B
Deformed Page

FIG. 6A
Non-Deformed Page

36

EP 4 402 556 B1

FIG. 6C

**FIG. 6D**

EP 4 402 556 B1

703

702

Printed Text
Printed Text
Printed Text
Printed Text
Printed Text
Printed Text
Printed Text
Printed Text
Printed Text
Printed Text
Printed Text
Printed Text
1

Printed Text
Printed Text
Printed Text
Printed Text
Printed Text
Printed Text
Printed Text
Printed Text
Printed Text
Printed Text
Printed Text
Printed Text
2

704A     706A          704B     706B

709

708

Projected Text
Projected Text
Projected Text
Projected Text
Projected Text
Projected Text
Projected Text
Projected Text
Projected Text
Projected Text
Projected Text
Projected Text
1

Projected Text
Projected Text
Projected Text
Projected Text
Projected Text
Projected Text
Projected Text
Projected Text
Projected Text
Projected Text
Projected Text
Projected Text
2

710A     712A          710B     712B

# FIG. 7A

702

| Printed Text | Printed Text |
| Printed Text | Printed Text |
| Printed Text | Printed Text |
| Printed Text | Printed Text |
| Printed Text | Printed Text |
| Printed Text | Printed Text |
| Printed Text | Printed Text |
| Printed Text | Printed Text |
| Printed Text | Printed Text |
| Printed Text | Printed Text |
| Printed Text | Printed Text |
| Printed Text | Printed Text |
| 3 | 4 |

704A    706A    704B    706B

708

| Projected Text | Projected Text |
| Projected Text | Projected Text |
| Projected Text | Projected Text |
| Projected Text | Projected Text |
| Projected Text | Projected Text |
| Projected Text | Projected Text |
| Projected Text | Projected Text |
| Projected Text | Projected Text |
| Projected Text | Projected Text |
| Projected Text | Projected Text |
| Projected Text | Projected Text |
| Projected Text | Projected Text |
| 3 | 4 |

710A    712A    710B    712B

# FIG. 7B

702

Printed Text
Printed Text
Printed Text
Printed Text
Printed Text
Printed Text
Printed Text
Printed Text
Printed Text
Printed Text
Printed Text
Printed Text
5

Printed Text
Printed Text
Printed Text
Printed Text
Printed Text
Printed Text
Printed Text
Printed Text
Printed Text
Printed Text
Printed Text
Printed Text
6

704A    706A    704B    706B

708

Projected Text
Projected Text
Projected Text
Projected Text
Projected Text
Projected Text
Projected Text
Projected Text
Projected Text
Projected Text
Projected Text
Projected Text
77

Projected Text
Projected Text
Projected Text
Projected Text
Projected Text
Projected Text
Projected Text
Projected Text
Projected Text
Projected Text
Projected Text
Projected Text
78

710A    712A    710B    712B

**FIG. 7C**

702

Printed Text
Printed Text
Printed Text
Printed Text
Printed Text
Printed Text
Printed Text
Printed Text
Printed Text
Printed Text
Printed Text
Printed Text
5

Printed Text
Printed Text
Printed Text
Printed Text
Printed Text
Printed Text
Printed Text
Printed Text
Printed Text
Printed Text
Printed Text
Printed Text
6

704A    706A    704B    706B

714

708

Projected Text

Projected Text
Projected Text
Projected Text
Projected Text
Projected Text
Projected Text
Projected Text
Projected Text
Projected Text
Projected Text
5

Projected Text
Projected Text
Projected Text
Projected Text
Projected Text
Projected Text
Projected Text
Projected Text
Projected Text
Projected Text
Projected Text
Projected Text
6

716

Note
Text

718

710A    712A    710B    712B

# FIG. 7D

702

| Printed Page Text | Printed Page Text |
| Printed Page Text | Printed Page Text |
| Printed Page Text | Printed Page Text |
| Printed Page Text | Printed Page Text |
| Printed Page Text | Printed Page Text |
| Printed Page Text | Printed Page Text |
| Printed Page Text | Printed Page Text |
| Printed Page Text | Printed Page Text |
| Printed Page Text | Printed Page Text |
| Printed Page Text | Printed Page Text |
| Printed Page Text | Printed Page Text |
| Printed Page Text | Printed Page Text |
| 5 | 6 |

704A    706A    704B    706B

708

| Projected Text | Projected Text |
| Projected Text | Projected Text |
| Projected Text | Projected Text |
| Projected Text | Projected Text |
| Projected Text | Projected Text |
| Projected Text | Projected Text |
| Projected Text | Projected Text |
| Projected Text | Projected Text |
| Projected Text | Projected Text |
| Projected Text | Projected Text |
| Projected Text | Projected Text |
| Projected Text | Projected Text |
| 5 | 78 |

710A    712A    710B    712B

# FIG. 7E

800

HMD 810

2nd Camera 830B

1st Camera 830A

# FIG. 8A

830

2nd Camera 830B

1st Camera 830A

HMD 810

User 820

# FIG. 8B

_900_

Receive, By An Extended Reality Device, A Request
To Display Media Content On A Display Surface
902

Determine A Pose Of The Display Surface And A Pose
Of The Extended Reality Device;
904

Based On The Pose Of The Display Surface And The
Pose Of The Extended Reality Device, Display The
Media Content By The Extended Reality Device
Relative To The Display Surface
906

# FIG. 9

1000

Storage
Device 1030

Service 1
1032

Service 2
1034

Service 3
1036

Input
Device 1045

Output
Device 1035

Communication
Interface 1040

Memory 1015

ROM 1020

RAM 1025

Connection 1005

Cache 1012

Processor 1010

# FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2012050326 A1

- US 2017243052 A1

### Non-patent literature cited in the description

- **MARK BILLINGHURST**. The MagicBook— Moving Seamlessly between Reality and Virtuality

- **MAN CHUEN LEUNG et al.** A projector-based movable hand-held display system. *IEEE CONFERENCE ON COMPUTER VISION AND PATTERN RECOGNITION : CVPR*, 2009, ISBN 978-1-4244-3992-8
- The universal media book. **SHILPI GUPTA et al.** MIXED AND AUGMENTED REALITY